# EUROPEAN PATENT APPLICATION

(11) **EP 4 224 606 A1**
(43) Date of publication of application: **09.08.2023**
(21) Application number: 21875068.5
(22) Date of filing: 03.09.2021
(51) Int. Cl.: H01M 50/269, H01M 50/213, H01M 50/244, H01M 50/247, H02J 7/00

(54) **ELECTRIC DEVICE SYSTEM AND BATTERY PACK**

(30) Priority: 30.09.2020 JP 2020165408; 25.03.2021 JP 2021051359
(71) Applicant: Koki Holdings Co., Ltd., Tokyo 108-6020 (JP)
(72) Inventor: YAMAGUCHI, Hayato, Hitachinaka-City Ibaraki 3128502 (JP); NISHIKAWA, Tomomasa, Hitachinaka-City Ibaraki 3128502 (JP); MATSUNO, Satoru, Hitachinaka-City Ibaraki 3128502 (JP)
(74) Representative: Meissner Bolte Partnerschaft mbB
(86) International application number: PCT/JP2021/032425
(87) International publication number: WO 2022/070766

(57) **Abstract**

Provided is an electric device system promoting widespread use of high-voltage devices. The present invention achieves an electric device system having: a low/intermediate-voltage battery pack 201 capable of outputting a low voltage (18 V) or an intermediate voltage (36 V); an intermediate/high-voltage battery pack 301 capable of outputting the intermediate voltage or a high voltage (72 V); a low-voltage device main body 1 configured to be connected to the low/intermediate-voltage battery pack and supplied with the low voltage; an intermediate-voltage device main body 31 configured to be connected to the low/intermediate-voltage battery pack and the intermediate/high-voltage battery pack and supplied with the intermediate voltage; and a high-voltage device main body 61 configured to be connected to the intermediate/high-voltage battery pack and supplied with the high voltage. The compatibility of a rail mechanism for each battery pack is maintained, the low/intermediate-voltage battery pack 201 and the intermediate/high-voltage battery pack 301 are set to have a voltage switching type, and any one of the low/intermediate-voltage battery pack 201 and the intermediate/high-voltage battery pack 301 can be attached to the intermediate-voltage device main body 31.

## Description

### [Technical Field]

The present invention relates to an electric device system in which a plurality of battery packs is attached to any of a plurality of electric devices to operate the electric device.

### [Background Art]

Electric devices such as power tools are driven by a battery pack using a secondary battery such as a lithium ion battery, and electric devices continue to be made cordless. Further, an electric device system that includes a voltage switching type battery pack capable of switching an output voltage to be shared between electric devices with different voltages and an electric device main body configured to use such a voltage switching type battery pack have also been put into practical use.

### [Citation List]

### [Patent Literature]

[Patent Literature 1]
International Publication No. 2018/079723

### [Summary of Invention]

### [Technical Problem]

A voltage switching type battery pack described in Patent Literature 1 is very convenient because it is possible to automatically switch an output voltage simply by attaching the voltage switching type battery pack to a corresponding electric device main body. If a voltage switching type battery pack capable of outputting a higher voltage or a voltage switching type battery pack capable of outputting a lower voltage could be newly added to an electric device system as such a voltage switching type battery pack, it is thought that users would be able to use a voltage switching type battery pack with different voltages prepared to be in a wide range according to their needs, making it more convenient. Although it is possible to make a high-voltage electric device by providing a plurality of battery pack attachment parts to which a plurality of battery packs can be attached, it is complicated because it is necessary to handle the plurality of battery packs collectively. In addition, since there is a plurality of battery pack attachment parts, the battery pack attachment parts are large and difficult to handle.

The present invention has been made in view of the above background, and an objective of the present invention is to provide an electric device system that deals with a wide range of voltages. Another objective of the present invention is to provide an electric device system including a battery pack that can deal with voltages different from those of existing voltage switching type battery packs while maintaining compatibility with the existing voltage switching type battery packs. Still another objective of the present invention is to provide an electric device system using a three-voltage battery pack capable of outputting three voltages of a low voltage, an intermediate voltage, and a high voltage.

### [Solution to Problem]

Typical features of the invention disclosed in the present application are as follows. According to an aspect of the present invention, an electric device system including: a low/intermediate-voltage battery pack capable of outputting a low voltage or an intermediate voltage; an intermediate/high-voltage battery pack capable of outputting the intermediate voltage or a high voltage; a low-voltage device main body configured to be connected to the low/intermediate-voltage battery pack and supplied with the low voltage; an intermediate-voltage device main body configured to be connected to the low/intermediate-voltage battery pack and the intermediate/high-voltage battery pack and supplied with the intermediate voltage; and a high-voltage device main body configured to be connected to the intermediate/high-voltage battery pack and supplied with the high voltage is realized. The low/intermediate-voltage battery pack and the intermediate/high-voltage battery pack of the electric device system each have a plurality of cell units, and the intermediate-voltage device main body has an intermediate voltage series terminal that connects the plurality of cell units of the low/intermediate-voltage battery pack in series when connected to the battery pack and an intermediate voltage parallel terminal that connects the plurality of cell units of the intermediate/high-voltage battery pack in parallel when connected to the battery pack. When the intermediate-voltage device main body is connected to the intermediate/high-voltage battery pack, the intermediate voltage series terminal is not connected to any terminal. Further, the high-voltage device main body has a high voltage series terminal that connects the plurality of cell units of the intermediate/high-voltage battery pack in series when connected to the battery pack.

According to another aspect of the present invention, in the electric device system, the intermediate/high-voltage battery pack has a pair of first output terminals connected to a positive electrode and a negative electrode of one of the plurality of cell units and a pair of second output terminals connected to a positive electrode and a negative electrode of another of the plurality of cell units, the high-voltage device main body has a first input terminal connected to one of a positive electrode and a negative electrode of the pair of first output terminals and a second input terminal connected to the other of a positive and a negative electrode of the pair of second output terminals, and the high voltage series terminal is connected to the other of the positive electrode and the negative electrode of the pair of first output terminals and to one of the positive electrode and the negative electrode of the pair of second output terminals.

According to still another aspect of the present invention, the intermediate/high-voltage battery pack has a board disposed above the plurality of cell units, a pair of first output terminals extending upward from the board and connected to a positive electrode and a negative electrode of one of the plurality of cell units, and a pair of second output terminals extending upward from the board and connected to a positive electrode and a negative electrode of another of the plurality of cell units, and the pair of first output terminals and the pair of second output terminals each have a connection portion connected to an input terminal of the intermediate-voltage device main body and an avoidance portion that is positioned between the connection portion and the board and avoids the intermediate voltage series terminal.

According to still another aspect of the present invention, an electric device system including: a battery pack that has a plurality of cell units and output terminals connected to the plurality of cell units, the battery pack being one of a three-voltage battery pack capable of outputting low/intermediate voltages and a low/intermediate-voltage battery pack capable of outputting low/intermediate voltages; a high-voltage device main body configured to be connectable with the three-voltage battery pack and supplied with the high voltage from the connected three-voltage battery pack; an intermediate-voltage device main body configured to be connectable with the three-voltage battery pack or the low/intermediate-voltage battery pack battery pack and supplied with the intermediate voltage from the connected three-voltage battery pack or low/intermediate-voltage battery pack; and a low-voltage device main body configured to be connectable with the three-voltage battery pack or the low/intermediate-voltage battery pack and supplied with the low voltage from the connected three-voltage battery pack or low/intermediate-voltage battery pack is configured. The intermediate-voltage device main body has an intermediate voltage series terminal configured to connect the plurality of cell units in series by being connected to some of the output terminals when connected to the three-voltage battery pack and to connect all of the plurality of the cell units in series by being connected to some of the output terminals when connected to the low/intermediate-voltage battery pack. Further, the intermediate-voltage device main body has an intermediate voltage parallel terminal configured to connect the plurality of cell units in parallel by being connected to output terminals other than the some of the output terminals when connected to the three-voltage battery pack and to connect the plurality of cell units to output terminals other than the some of the output terminals when connected to the low/intermediate-voltage battery pack.

According to still another aspect of the present invention, the electric device system is configured to further include an intermediate/high-voltage battery pack that has a plurality of cell units and output terminals connected to the plurality of cell units and is capable of outputting the intermediate voltage and the high voltage, wherein the intermediate voltage series terminal is configured not to be connected to the output terminals when the intermediate-voltage device main body is connected to the intermediate/high-voltage battery pack, and the intermediate voltage parallel terminal is configured to connect the plurality of cell units in parallel by being connected to the output terminals when the intermediate-voltage device main body is connected to the intermediate/high-voltage battery pack.

According to still another aspect of the present invention, there is provided an electric device system including: a three-voltage battery pack capable of outputting a low voltage, an intermediate voltage, and a high voltage; a two-voltage battery pack capable of outputting any two of the low voltage, the intermediate voltage, and the high voltage, or a one-voltage battery pack capable of outputting any one of the low voltage, the intermediate voltage, and the high voltage; a high-voltage device main body configured to be connected to the three-voltage battery pack and the two-voltage battery pack capable of outputting the high voltage or the one-voltage battery pack capable of outputting the high voltage and supplied with the high voltage; an intermediate-voltage device main body configured to be connected to the three-voltage battery pack and the two-voltage battery pack capable of outputting the intermediate voltage or the one-voltage battery pack capable of outputting the intermediate voltage and supplied with the intermediate voltage; and a low-voltage device main body configured to be connected to the three-voltage battery pack and the two-voltage battery pack capable of outputting the low voltage or the one-voltage battery pack capable of outputting the low voltage and supplied with the low voltage.

According to still another aspect of the present invention, the three-voltage battery pack and the two-voltage battery pack each have a plurality of cell units, and the intermediate-voltage device main body has an intermediate voltage series terminal that connects some of the plurality of cell units of the three-voltage battery pack or the two-voltage battery pack in series when connected to the three-voltage battery pack or the two-voltage battery pack capable of outputting the intermediate voltage and the high voltage and connects the plurality of cell units of the two-voltage battery pack in series when connected to the two-voltage battery pack capable of outputting the low voltage and the intermediate voltage, and an intermediate voltage parallel terminal that connects some of the plurality of cell units of the three-voltage battery pack or the two-voltage battery pack in parallel when connected to the three-voltage battery pack or the two-voltage battery pack capable of outputting the intermediate voltage and the high voltage and connects the plurality of cell units of the two-voltage battery pack in parallel when connected to the two-voltage battery pack capable of outputting the low voltage and the intermediate voltage. Further, the high-voltage device main body has a high voltage series terminal that connects the plurality of cell units of the three-voltage battery pack or the two-voltage battery pack in series when connected to the three-voltage battery pack or the two-voltage battery pack capable of outputting the intermediate voltage and the high voltage.

According to still another aspect of the present invention, there is provided a battery pack which is an intermediate/high-voltage battery pack that has a plurality of first cell units, is capable of switching an output voltage between an intermediate voltage and a high voltage according to a connection state of the plurality of cell units, and is capable of being connected to a high-voltage device main body and an intermediate-voltage device main body, the battery pack including: a first slot into which power supply terminals of the high-voltage device main body and the intermediate-voltage device main body can be inserted; and a second slot into which none of the terminals of the high-voltage device main body is inserted when connected to the high-voltage device main body, wherein, when the battery pack is connected to the intermediate-voltage device main body, a short-circuiting bar provided in the intermediate-voltage device main body, which connects a plurality of second cell units of a low/intermediate-voltage battery pack capable of switching an output voltage between a low voltage and the intermediate voltage in series when the intermediate-voltage device main body is connected to the low/intermediate-voltage battery pack, is inserted into the second slot.

### [Advantageous Effects of Invention]

According to the present invention, it is possible to provide an electric device system that deals with a wide range of voltages. More specifically, it is possible to provide an electric device system including a voltage switching type battery pack that can deal with voltages different from those of existing voltage switching type battery packs while maintaining compatibility with the existing voltage switching type battery packs. In addition, it is possible to provide an electric device system using a three-voltage battery pack capable of outputting three voltages of a low voltage, an intermediate voltage, and a high voltage. For example, it is possible to further provide a battery pack that deals with the intermediate/high voltages and has compatibility with the battery packs of the related art that deals with the low/intermediate voltages, and thus it is possible to deal with electric device main bodies of three voltages using two battery packs. Further, it is possible to provide a battery pack that deals with the low/intermediate/high voltages and has compatibility with these two-voltage battery packs, and thus it is possible to deal with electric main bodies of three voltages using one battery pack. At this time, no special operation is required for switching the voltage of the battery pack, and an output voltage can be switched to an appropriate output voltage simply by attaching the battery pack to the corresponding electric device main body, and thus handling of the battery pack is easy. In addition, since a housing size of the high-voltage device main body can be reduced, it is possible to provide an electric device that is easy to handle. In addition, it is possible to provide an electric device system in which an increase in the size of the voltage switching type battery pack is curbed.

### [Brief Description of Drawings]

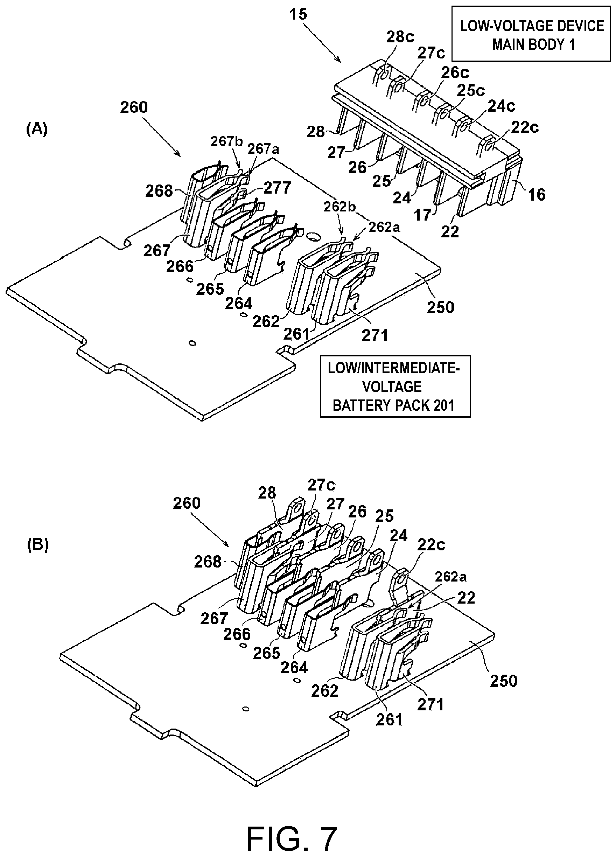

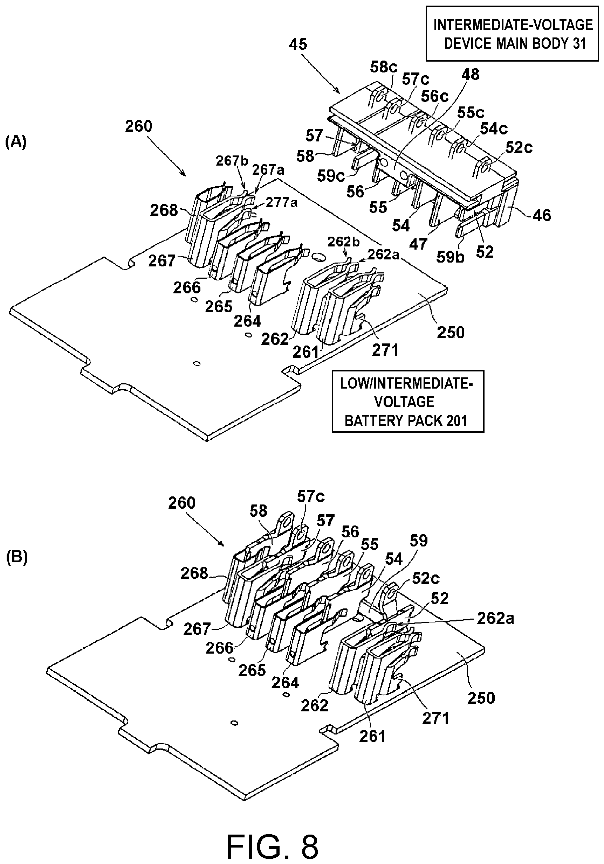

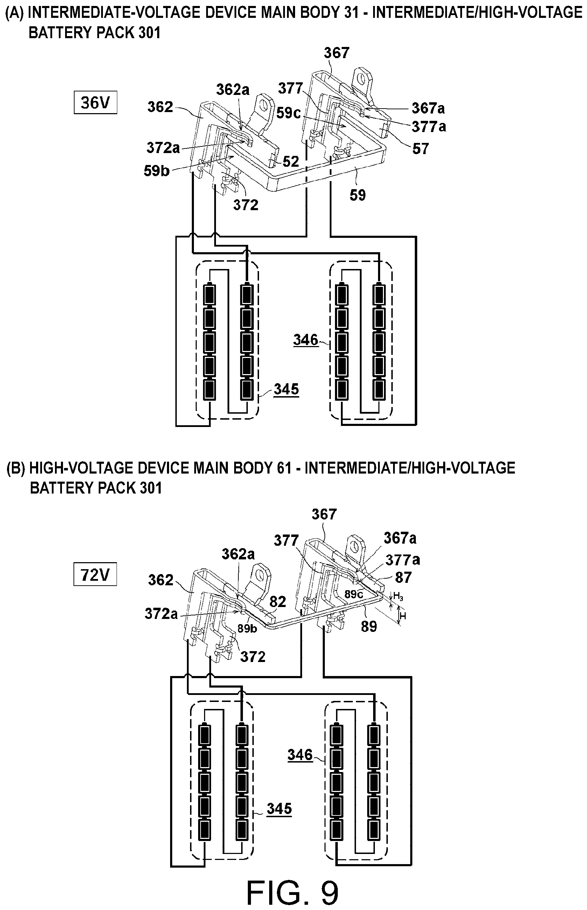

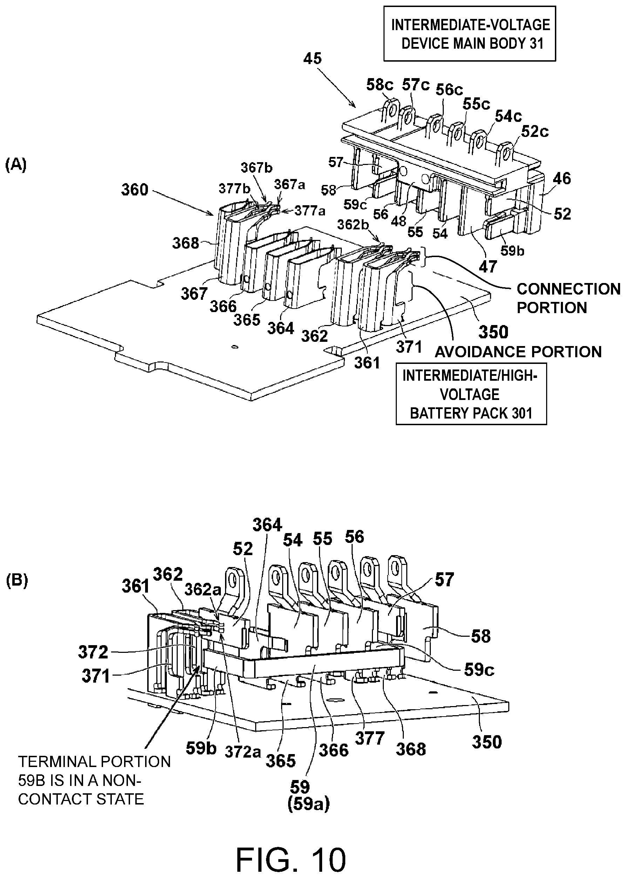

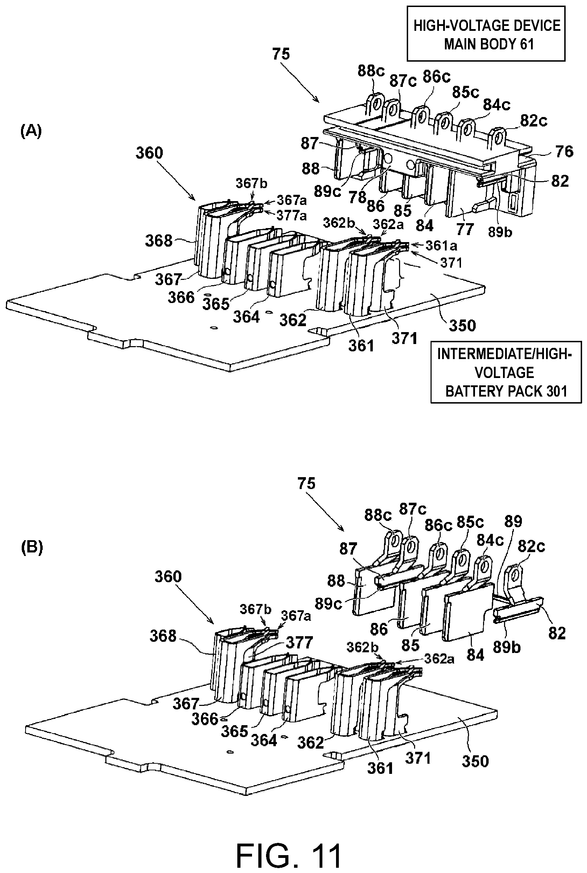

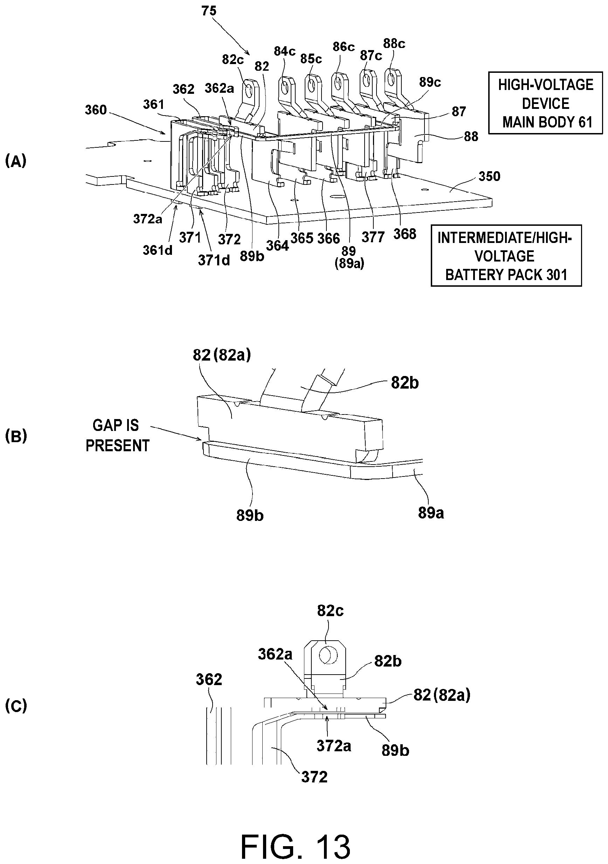

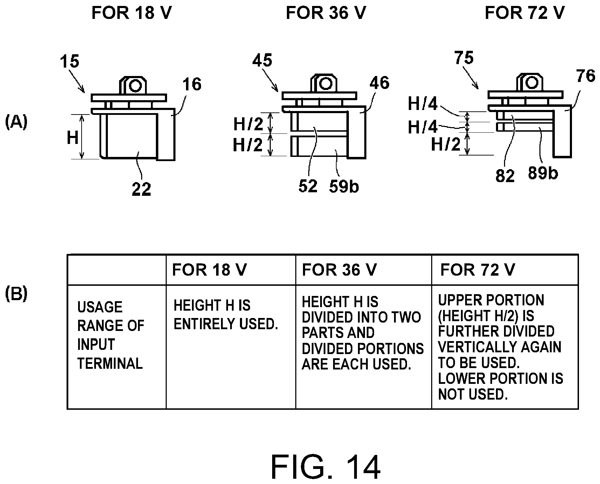

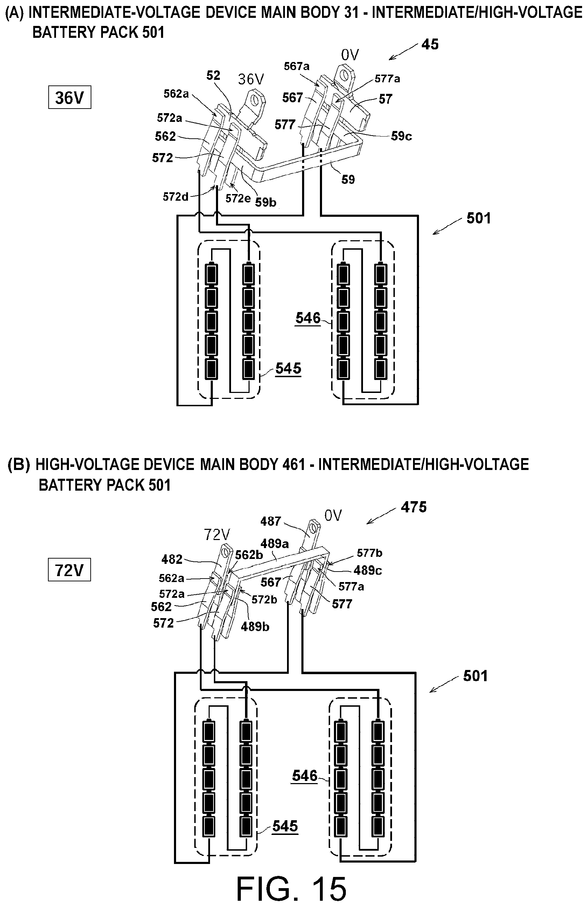

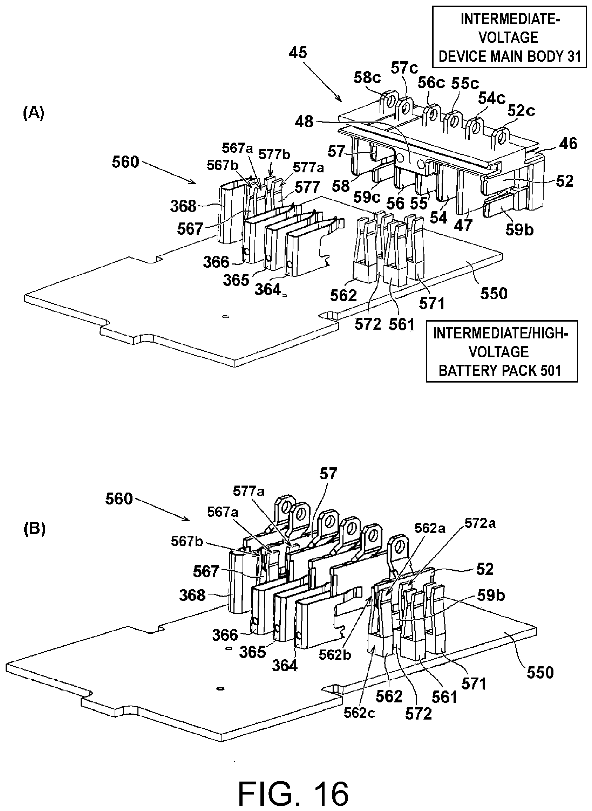

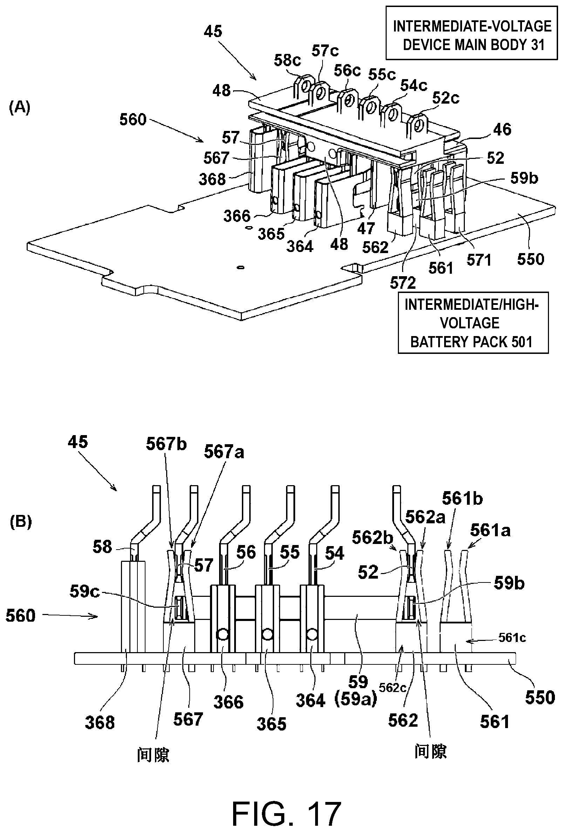

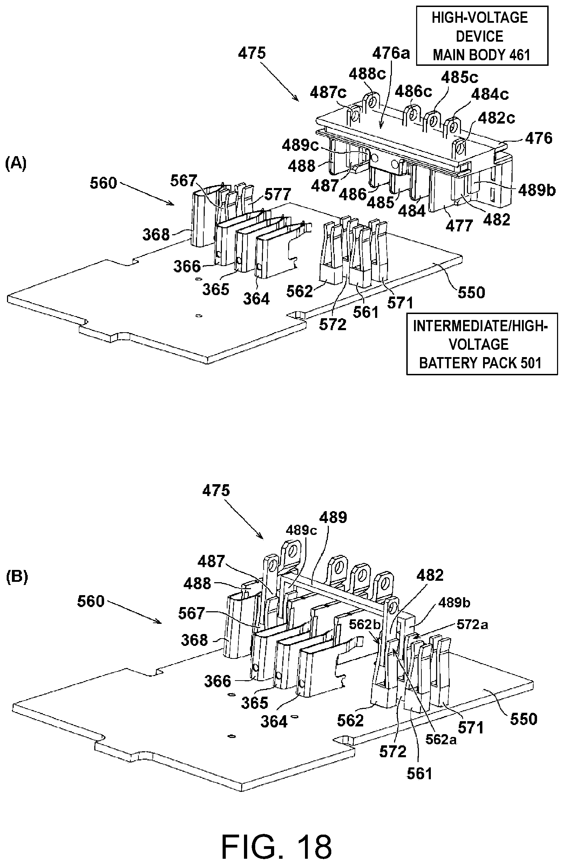

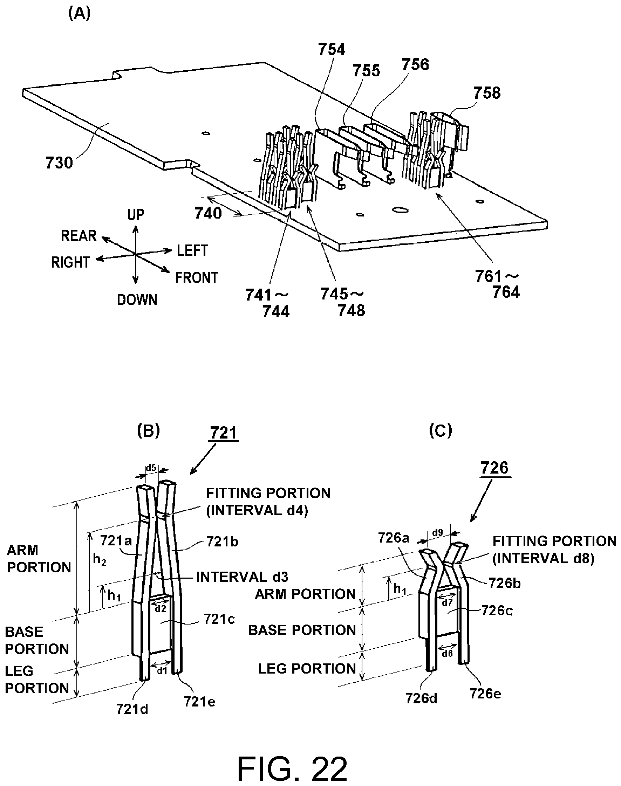

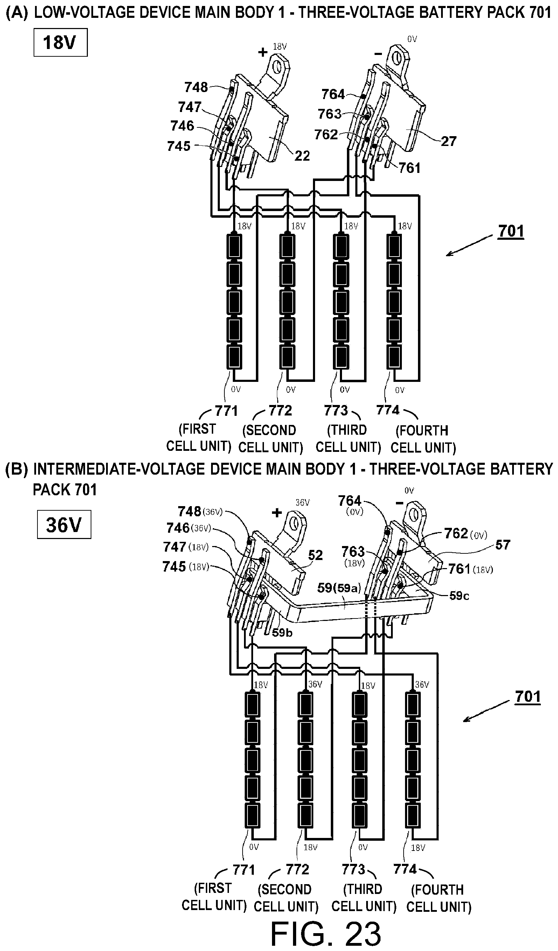

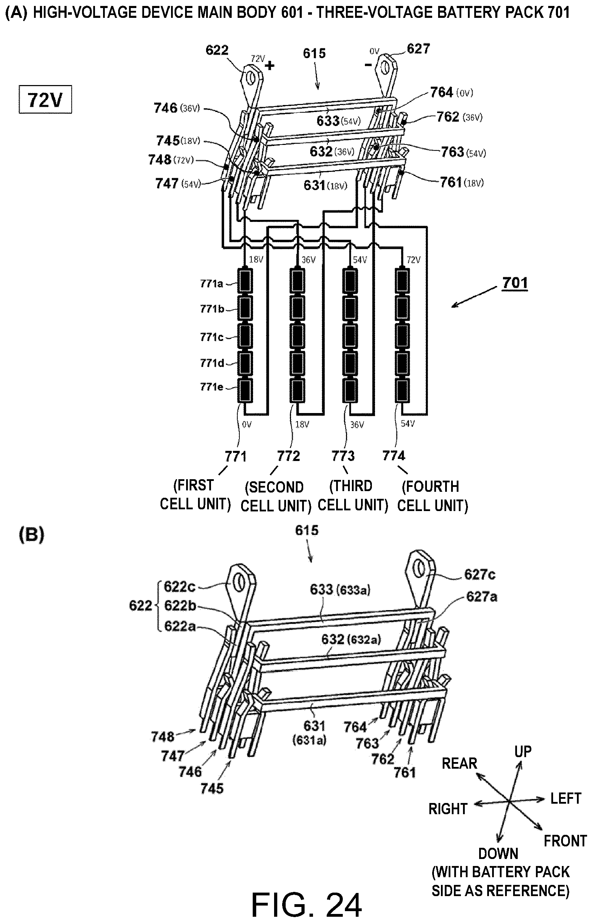

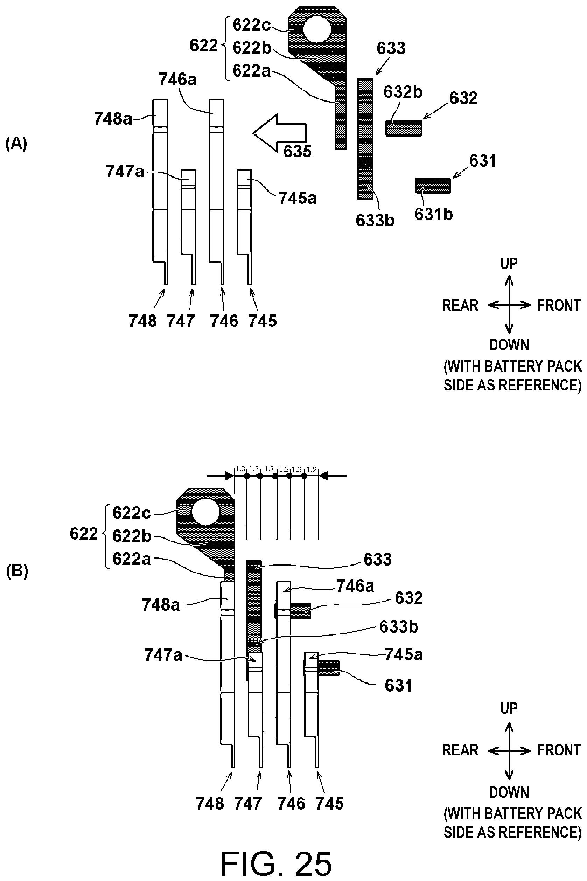

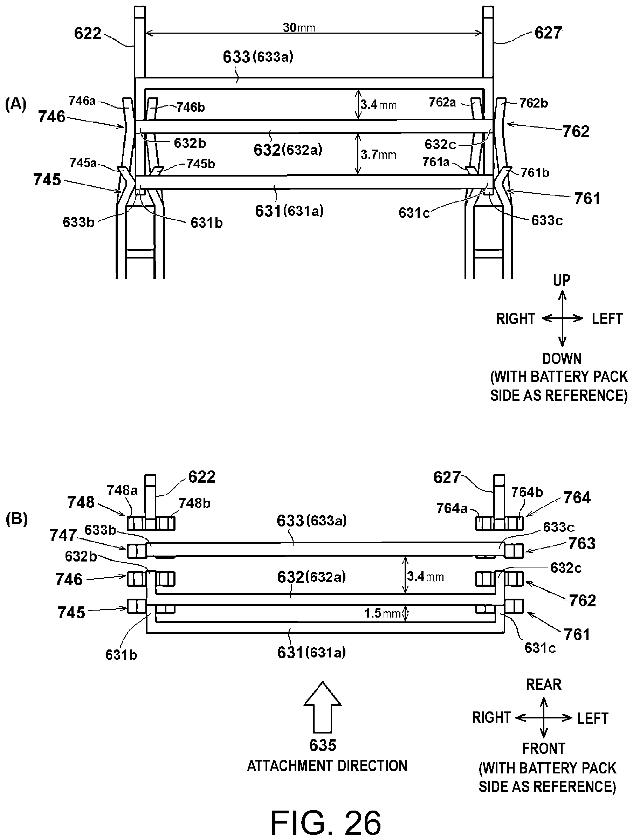

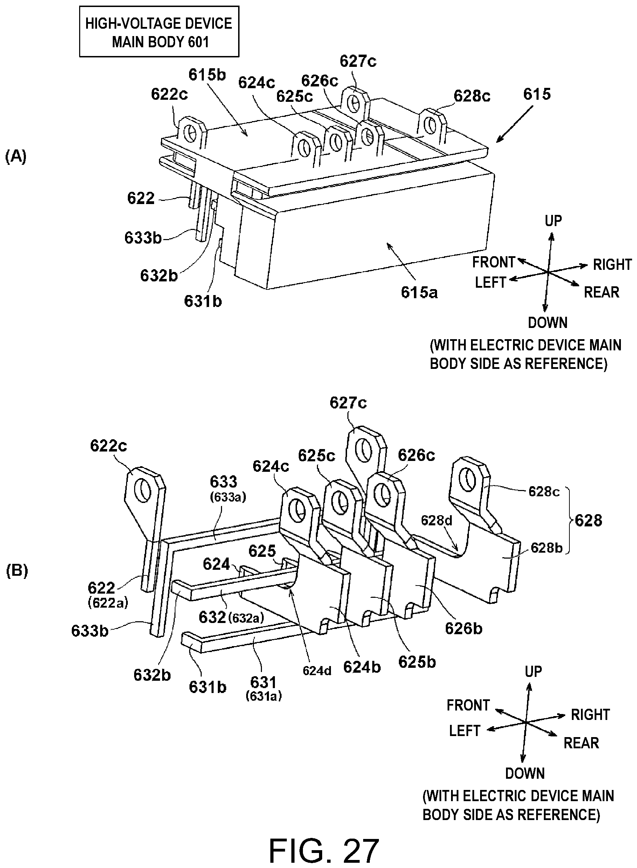

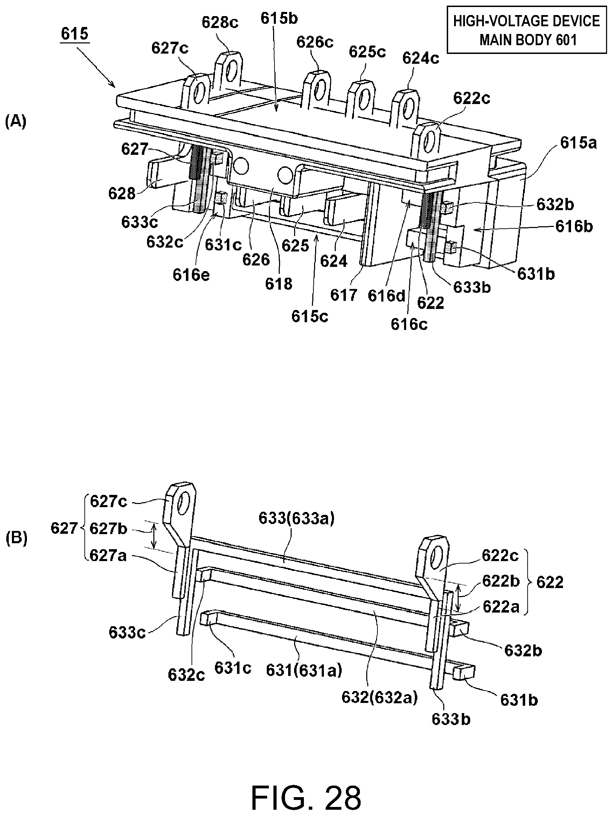

Fig. 1 is an overall view of an electric device system according to an embodiment of the present invention.
Fig. 2 is a perspective view of an impact tool 1A and a battery pack 101 attached thereto according to the embodiment of the present invention.
Fig. 3 is a perspective view of the low-voltage battery pack 101 of Fig. 2 from another angle.
Fig. 4 is a perspective view showing an appearance of a low/intermediate-voltage battery pack 201 of Fig. 1.
Fig. 5 is a perspective view showing an appearance of an intermediate/high-voltage battery pack 301 of Fig. 1.
(A) of Fig. 6 is a connection circuit diagram between the low/intermediate-voltage battery pack 201 and a low-voltage device main body 1, and(B) of Fig. 6 is a connection circuit diagram between the low/intermediate-voltage battery pack 201 and an intermediate-voltage device main body 31.
(A) and (B) of Fig. 7 are views for explaining a connection state between a terminal part 15 of the low-voltage device main body 1 and a connection terminal group 260 of the low/intermediate-voltage battery pack 201, (A) of Fig. 7 is a state in which the terminal part 15 and the connection terminal group 260 are separate from each other, and (B) of Fig. 7 is a state in which the terminal part 15 and the connection terminal group 260 are fitted to each other.
(A) and (B) of Fig. 8 are views for explaining a connection state between a terminal part 45 of the intermediate-voltage device main body 31 and a connection terminal group 260 of the low/intermediate-voltage battery pack 201, (A) of Fig. 8 is a state in which the terminal part 45 and the connection terminal group 260 are separate from each other, and (B) of Fig. 8 is a state in which the terminal part 45 and the connection terminal group 260 are fitted to each other.
(A) of Fig. 9 is a connection circuit diagram between the intermediate-voltage device main body 31 and an intermediate/high-voltage battery pack 301, and (B) of Fig. 9 is a connection circuit diagram between a high-voltage device main body 61 and the intermediate/high-voltage battery pack 301.
(A) and (B) of Fig. 10 are views for explaining a connection state between the terminal part 45 of the intermediate-voltage device main body 31 and a connection terminal group 360 of the intermediate/high-voltage battery pack 301, (A) of Fig. 10 is a state in which the terminal part 45 and the connection terminal group 360 are separate from each other, and (B) of Fig. 10 is a state in which the terminal part 45 and the connection terminal group 360 are fitted to each other.
(A) and (B) of Fig. 11 are views for explaining a connection state between the terminal part 75 of the high-voltage device main body 61 and the connection terminal group 360 of the intermediate/high-voltage battery pack 301, (A) of Fig. 11 is a state in which the terminal part 75 and the connection terminal group 360 are separate from each other, and (B) of Fig. 11 is a view showing a shape of the terminal part 75 from which a resin portion is removed in the same view as (A) of Fig. 11.

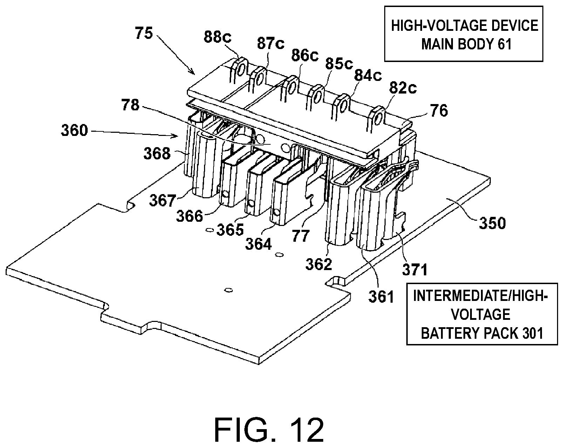

Fig. 12 is a view showing a state in which the terminal part 75 of the high-voltage device main body 61 and the connection terminal group 360 of the intermediate/high-voltage battery pack 301 are fitted to each other.
(A) of Fig. 13 is a perspective view of the terminal part 75 and the connection terminal group 360 of Fig. 12 in another direction (when fitted), (B) of Fig. 13 is a partially enlarged view of a positive electrode input terminal 82 and a terminal portion 89b of a short-circuiting bar 89, and (C) of Fig. 13 is a view of a portion of positive electrode terminals 362 and 372 of (A) of Fig. 13 from the right.
(A) of Fig. 14 is a side view showing shapes of the terminal parts 15, 45, and 75, and (B) of Fig. 14 is a comparison table summarizing an arrangement situation of power terminals (a positive electrode input terminal and a negative electrode input terminal) in the terminal parts 15, 45, and 75.
(A) of Fig. 15 is a connection circuit diagram between the intermediate-voltage device main body 31 and an intermediate/high-voltage battery pack 501 according to a second embodiment of the present invention, and (B) of Fig. 15 is a connection circuit diagram between a high-voltage device main body 461 and the intermediate/high-voltage battery pack 501.
(A) and (B) of Fig. 16 are view2 (part 1) for explaining a connection state between the terminal part 45 of the intermediate-voltage device main body 31 and a connection terminal group 560 of the intermediate/high-voltage battery pack 501 according to the second embodiment, (A) of Fig. 16 is a state in which the terminal part 45 and the connection terminal group 560 are separate from each other, and (B) of Fig. 16 is a state in which the terminal part 45 and the connection terminal group 560 are fitted to each other.
(A) and (B) of Fig. 17 are views (part 2) of the terminal part 45 of the intermediate-voltage device main body 31 and the connection terminal group 560 of the intermediate/high-voltage battery pack 501 according to the second embodiment, (A) of Fig. 17 is a perspective view showing a state in which the terminal part 45 and the connection terminal group 560 are fitted to each other, and (B) of Fig. 17 is a rear view of (A) of Fig. 17.
(A) and (B) of Fig. 18 are views (part 1) for explaining a state in which a terminal part 475 of the high-voltage device main body 461 and the connection terminal group 560 of the intermediate/high-voltage battery pack 501 according to the second embodiment are fitted to each other, (A) of Fig. 18 is a state in which the terminal part 475 and the connection terminal group 560 are separate from each other, and (B) of Fig. 18 is a state in which the terminal part 475 and the connection terminal group 560 are fitted to each other.

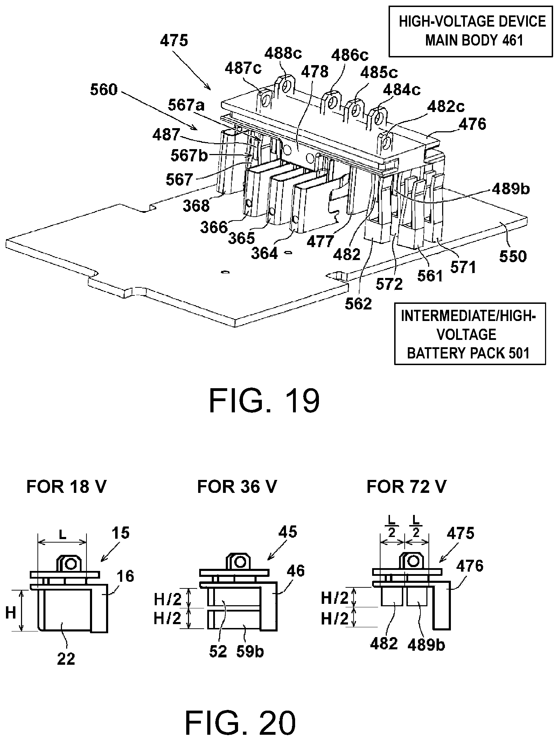

Fig. 19 is a view (part 2) showing a state in which the terminal part 475 of the high-voltage device main body 461 and the connection terminal group 560 of the intermediate/high-voltage battery pack 501 according to the second embodiment are fitted to each other.
Fig. 20 is a schematic view showing shapes of terminal parts 15, 45, and 475 and is a view for explaining their size relationships.

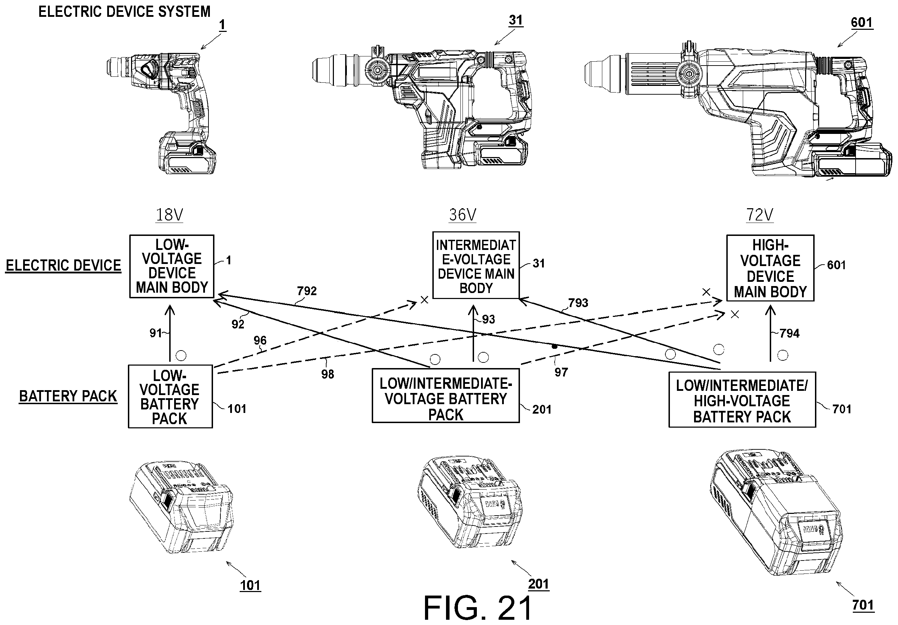

Fig. 21 is an overall view of an electric device system according to a third embodiment of the present invention.
(A) to (C) of Fig. 22 are views showing a connection terminal group of a three-voltage battery pack 701 of Fig. 21, (A) of Fig. 22 is a perspective view of all of a circuit board 730 and a connection terminal group 740, (B) of Fig. 22 is a perspective view of a large-sized terminal component 721, and (C) of Fig. 22 is a perspective view of a small-sized terminal component 726.
(A) of Fig. 23 is a connection circuit diagram between the three-voltage battery pack 701 and a low-voltage device main body 1, and (B) of Fig. 23 is a connection circuit diagram between the three-voltage battery pack 701 and an intermediate-voltage device main body 31.
(A) of Fig. 24 is a connection circuit diagram between the three-voltage battery pack 701 and a high-voltage device main body 601 according to the third embodiment of the present invention, and (B) of Fig. 24 is a perspective view showing a state in which a terminal part 615 of the high-voltage device main body 601 in Fig. 21 and a power terminal portion of the connection terminal group 740 are fitted to each other.
(A) of Fig. 25 is a right side view of a state before the terminal part 615 of the high-voltage device main body 601 in Fig. 21 is fitted to a positive electrode terminal group of the connection terminal group 740, and (B) of Fig. 25 is a right side view of the state after the terminal part 615 is fitted to the positive electrode terminal group of the connection terminal group 740.
(A) of Fig. 26 is a front view of (B) of Fig. 24, and (B) of Fig. 26 is a top view of (B) of Fig. 24.
(A) of Fig. 27 is a perspective view of the terminal part 615 of the high-voltage device main body 601 in Fig. 21 from the rear, and (B) of Fig. 27 is a perspective view of the connection terminal group cast in a resin portion in (A) of Fig. 27.
(A) of Fig. 28 is a perspective view of the terminal part 615 of the high-voltage device main body 601 in Fig. 21 from the front, and (B) of Fig. 28 is a perspective view of a positive electrode input terminal 622, a negative electrode input terminal 627, and short-circuiting bars 631, 632, and 633 cast in a resin portion in (A) of Fig. 28.

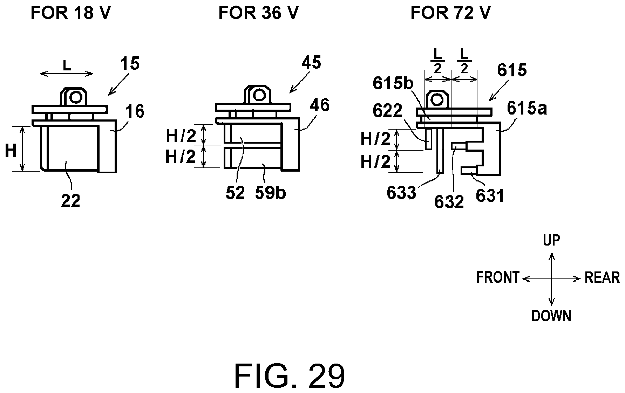

Fig. 29 is a schematic view showing shapes of terminal parts 15, 45, and 615 and is a view for explaining their size relationships.

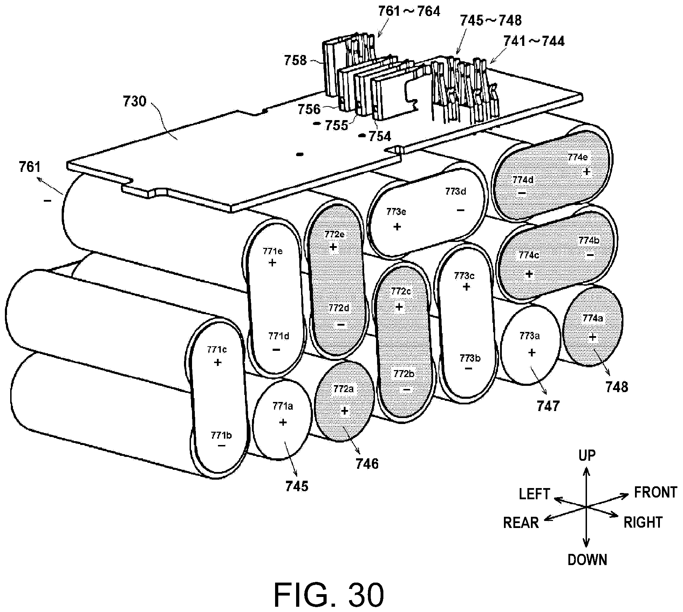

Fig. 30 is a perspective view showing an arrangement of battery cells in the three-voltage battery pack 701 in Fig. 21.

### [Description of Embodiments]

### Embodiment 1

Hereinafter, embodiments of the present invention will be described with reference to the drawings. In the drawings below, the same parts are denoted by the same reference signs, and repeated descriptions are omitted. Further, in this description, frontward, rearward, upward, and downward directions are described as directions shown in the drawings.

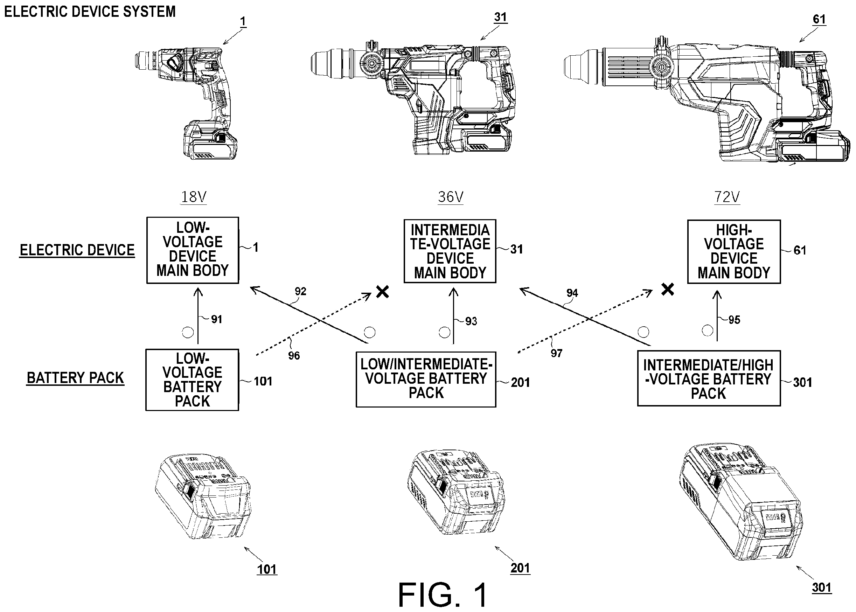

Fig. 1 is an overall view of an electric device system according to an embodiment of the present invention. The electric device system is constituted by a plurality of electric device main bodies (1, 31, 61) and a plurality of battery packs (101, 201, 301). The electric device main bodies (1, 31, 61) are devices that operate with the corresponding battery pack (any of 101, 201, and 301) attached thereto and are cordless devices that do not require an AC power supply. The electric device main bodies (1, 31, 61) are classified according to a rated voltage of each battery pack used. Here, the electric device main bodies (1, 31, 61) are classified into an electric device group configured to be supplied with a low voltage, or a rated voltage of 18 V (which is a low-voltage device main body, hereinafter referred to as a "low-voltage device main body 1"), an electric device group configured to be supplied with an intermediate voltage, or a rated voltage of 36 V (which is an intermediate-voltage device main body, hereinafter referred to as an "intermediate-voltage device main body 31"), and an electric device group configured to be supplied with a high voltage, or a rated voltage of 72 V (which is a high-voltage electric device main body, hereinafter referred to as a "high-voltage device main body 61"). In this description, a state in which the battery pack (101, 201, 301) is attached to the device is referred to as an "electric device," and a main body side in a state in which the battery pack (101, 201, 301) is removed from the device is referred to as an "electric device main body."

Fig. 1 shows an illustration of a cordless rotary hammer drill as the low-voltage device main body 1, but it is not limited to the hammer drill, and various devices such as an impact driver, an impact wrench, a driver drill, a disk grinder, a blower, a cleaner, a cutter, a band saw, a multi-tool, a jig saw, a saver saw, a chain saw, a circular saw, a planer, a pin nailer, a tacker, a nailer, a television set, a radio, a speaker, a fan, a refrigerator, a light, a high-pressure washer, and a brush cutter are used.

Fig. 1 shows an illustration of a high-output cordless rotary hammer drill as the intermediate-voltage device main body 31, but it is not limited to the hammer drill, and devices required to have a higher output than the low-voltage device main body 1, for example, various devices such as an impact wrench, a vibration driver drill, a disk grinder, a blower, a cleaner, a rebar cut bender, a chip saw cutter, a jig saw, a saver saw, a dust-collecting circular saw, a chain saw, a circular saw, a finishing nailer, a tacker, a concrete vibrator, a tree trimmer, and a brush cutter, are used as the intermediate-voltage device main body 31. Further, Fig. 1 shows an illustration of a cordless rotary hammer as the high-voltage device main body 61, but a device which is required to have a higher output than the intermediate-voltage device main body 31 and is similar to the intermediate-voltage device main body 31 is used as the high-voltage device main body 61. The high-voltage device main body 61 also includes a main body of a high-voltage electric device that can be realized with an operating voltage of 72 V (a direct current), for example, a cutter, a chip saw cutting machine, and the like.

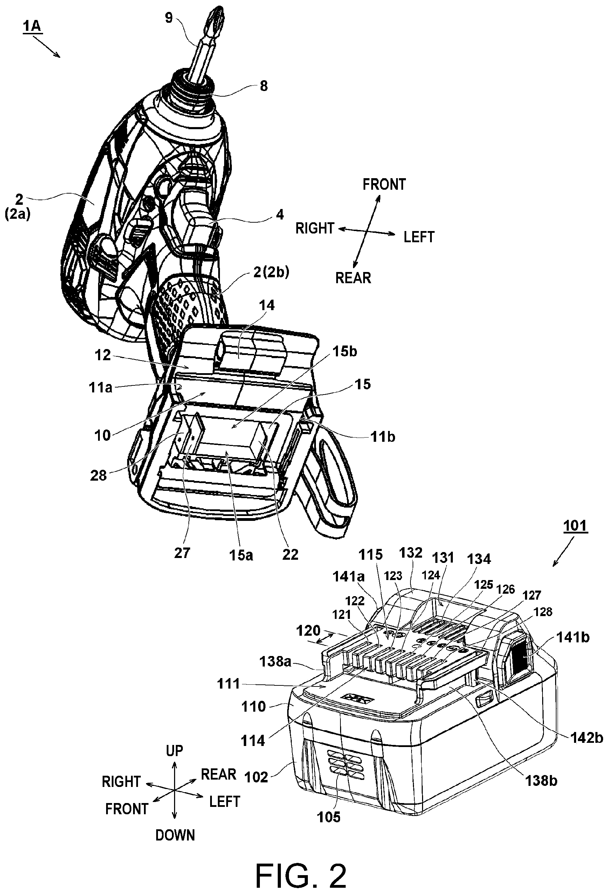

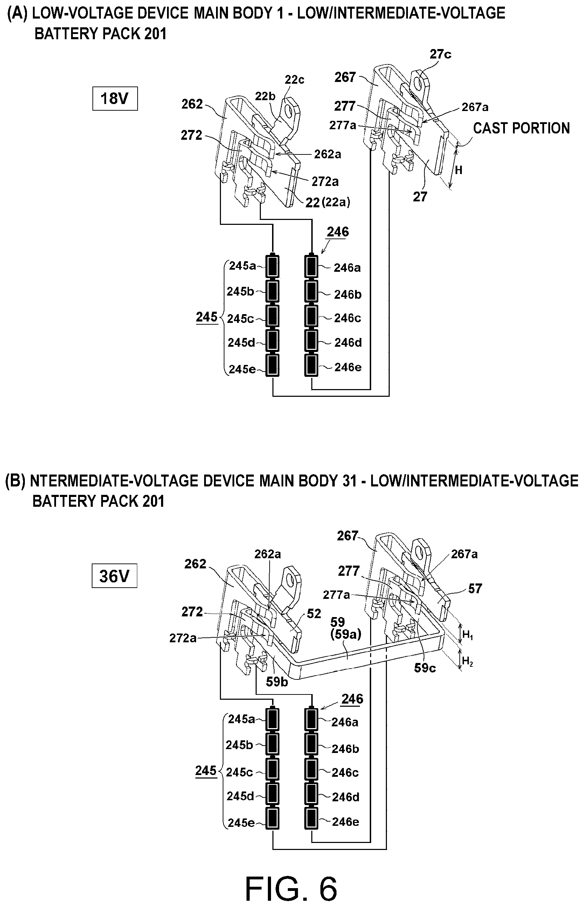

The battery pack (101, 201, 301) is detachable from the corresponding electric device main body (1, 31, 61) and has a predetermined rated voltage. Here, examples of the battery pack that constitutes the electric device system include a low/intermediate-voltage battery pack 201 (a first two-voltage battery pack) that can be attached to both the low-voltage device main body 1 and the intermediate-voltage device main body 31 and an intermediate/high-voltage battery pack 301 (a second two-voltage battery pack) that can be attached to both the intermediate-voltage device main body 31 and the high-voltage device main body 61. A low-voltage battery pack 101 is a power supply for a single voltage (here, rated 18 V) used in the related art. Each of the battery packs 101, 201, and 301 accommodates a plurality of battery cells in a synthetic resin case. A rail groove (which will be described later with reference to Fig. 2) for attaching the battery pack to the electric device main body (1, 31, 61), a connection terminal group (which will be described later with reference to (A) and (B) of Fig. 6 and thereafter) for realizing electrical connection, and a latch mechanism (which will be described later with reference to Fig. 2) for maintaining or releasing the attachment state of the battery pack with respect to the electric device main body (1, 31, 61) are provided on an upper portion of each of the battery packs 101, 201, and 301.

In Fig. 1, solid line arrows 91 to 95 indicating that any of the battery packs 101, 201, and 301 can be attached to any of the electric device main bodies 1, 31, and 61 indicate their corresponding relationships. The low-voltage battery pack 101 is exclusively for 18 V (exclusively for the low-voltage device main body 1) and is a single-voltage power supply, and thus the low-voltage battery pack 101 cannot be used in the intermediate-voltage device main body 31 for 36 V as shown as an x in front of a dotted line arrow 96. Here, it is considered that "cannot be used" is realized in three states of (1) a case where the low-voltage battery pack 101 cannot be physically attached to the intermediate-voltage device main body 31, (2) a case where attachment is possible but an electric connection state is not established, and (3) a case where physical and electrical connection is possible but the intermediate-voltage device main body 31 does not actually operate due to insufficient voltage. The electric device system of the present embodiment can be configured in any of the states, but from the standpoint of the user, it is most preferable to configure the electric device system such that the low-voltage battery pack 101 cannot be physically attached to the intermediate-voltage device main body 31. In the present embodiment, since a protrusion 48 (which will be described later with reference to (A) and (B) of Fig. 8) is formed on a battery pack mounting portion of the intermediate-voltage device main body 31, the low-voltage battery pack 101 interferes with the protrusion 48, and thus the electric device system is configured such that the low-voltage battery pack 101 is prevented from being attached to the intermediate-voltage device main body 31. Therefore, the user can easily discriminate that the low-voltage battery pack 101 cannot be used in the intermediate-voltage device main body 31 by configuring electric device system such that the unusable low-voltage battery pack 101 cannot be erroneously attached to the intermediate-voltage device main body 31. The low-voltage battery pack 101 is configured not to be physically attached to the high-voltage device main body 61, although not indicated by the dotted line arrow in Fig. 1. This is because, like the intermediate-voltage device main body 31, a protrusion 78 (see (A) and (B) of Fig. 11, which will be described later) for preventing erroneous attachment is formed on a battery pack mounting portion of the high-voltage device main body 61.

The low/intermediate-voltage battery pack 201 is a so-called different voltage (multi-volt) supportable power supply capable of outputting either 18 V or 36 V The low/intermediate-voltage battery pack 201 can be physically attached to either the low-voltage device main body 1 as indicated by the solid line arrow 92 or the intermediate-voltage device main body 31 as indicated by the solid line arrow 93 and can be electrically connected to a device side connection terminal on a side of the electric device main body (1, 31). The low/intermediate-voltage battery pack 201 cannot be used in the high-voltage device main body 61 as indicated by a dotted line arrow 97. Unusability in this case may be realized in any of the three states of (1) to (3) described above.

The intermediate/high-voltage battery pack 301 is a so-called different voltage (multi-volt) supportable power supply capable of outputting either 36 V or 72 V In the intermediate/high-voltage battery pack 301, a basic attachment structure, that is, the rail groove and the latch mechanism for attaching the intermediate/high-voltage battery pack 301 to the electric device main body (31, 61), has a shape compatible with the low/intermediate-voltage battery pack 201. The intermediate/high-voltage battery pack 301 has twice the voltage (a rated voltage of 72 V) of the low/intermediate-voltage battery pack 201, and thus requires twice the number of battery cells of the intermediate/high-voltage battery pack 301. Therefore, in a case where a battery cell of the same size (for example, an 18650 size) is used, the size of the intermediate/high-voltage battery pack 301 is nearly doubled as shown in Fig. 1. However, the number or shape of rail grooves, latch mechanisms, or slits of a slit group for accommodating the connection terminals is substantially the same. The intermediate/high-voltage battery pack 301 can be physically attached to either the intermediate-voltage device main body 31 as indicated by the solid line arrow 94 or the high-voltage device main body 61 as indicated by the solid line arrow 95 and can be electrically connected to a device side connection terminal on a side of the electric device main body (31, 61). The intermediate/high-voltage battery pack 301 cannot be used in the low-voltage device main body 1 although not indicated by an arrow. Unusability in this case means that it cannot be physically attached as in (1) described above, or can be configured as in (2) described above.

Although not shown in Fig. 1, each of the battery packs 101, 201, and 301 can be charged using an external charger (not shown) after being removed from the electric device main body (1, 31, 61). Here, if two chargers for 18 V and 36 V are prepared, all the battery packs 101, 201, and 301 can be charged. That is, the battery packs 101 and 201 are charged using a charger for a low voltage (18 V), and the battery pack 301 is charged using a charger for an intermediate voltage (36 V). Further, the battery pack 201 can be charged using a charger for an intermediate voltage (36 V), and the battery pack 301 can be charged using a charger for a high voltage (72 V).

In the electric device system shown in Fig. 1, a combination of a low voltage, an intermediate voltage, and high voltage is configured as 18 V, 36 V, and 72 V, but the present invention is not limited to the combination of these voltages, and a combination of 14.4 V, 28.8 V and 57.6 V or another combination may be used. Here, if the combination is made such that the intermediate voltage is twice the low voltage and the high voltage is twice the intermediate voltage, it is preferable because a terminal configuration of the battery pack which will be described in Fig. 2 and thereafter is easily realized. In addition, it is not limited to 2 times and may be 3 times, 4 times, or the like. In addition, when an output voltage on a high side of the low/intermediate-voltage battery pack 201 and an output voltage on a low side of the intermediate/high-voltage battery pack 301 are set to be the same, the overlapping electric device main body (here, the intermediate-voltage device main body 31) exists, and thus users who mainly have low to intermediate power device main bodies, or users who mainly have intermediate to high power device main bodies can use the intermediate-voltage device main body 31 simply by preparing one battery pack. Therefore, it is easy to use and convenient.

Fig. 2 is a perspective view of the electric device main body and the battery pack 101 attached thereto according to the embodiment of the present invention. Here, an example of an impact tool 1A is shown as the low-voltage device main body. The battery pack 101 can be attached and detached to and from the impact tool 1A with an operating voltage of 18 V, and the impact tool 1A drives a tip tool or a working device using a rotational driving force of a motor (not shown). The impact tool 1A performs a tightening operation by applying a rotational force or an axial striking force to the tip tool 9. The electric device main body 1 (the low-voltage device main body 1A) includes a housing 2 which is an outer frame that forms an outer shape. The housing 2 is constituted by a body part 2a that accommodates a motor and a power transmission mechanism (not shown), a handle part 2b that extends downward from the body part 2a, and a battery pack attachment part 10 that is formed below the handle part 2b. A trigger-like operation switch 4 is provided in a part of the handle part 2b near which an index finger touches when the user grips the handle portion 2b. An anvil (not visible in the figure) as an output shaft is provided on a front side of the housing 2, and a tip tool holder 8 for attaching a tip tool 9 is provided at a tip of the anvil. Here, a screwdriver bit of Phillips is attached as the tip tool 9.

Rail portions 11a and 11b including grooves and rails extending in parallel in a front-rear direction are formed in inner wall portions on both left and right sides of the battery pack attachment part 10, and a terminal part 15A is provided therebetween. The terminal part 15A is manufactured by integrally molding a non-conductive material such as a synthetic resin. Here, a plurality of metal terminals, for example, a positive electrode input terminal 22, a negative electrode input terminal 27, and an LD terminal (an abnormal signal terminal) 28, is cast in the non-conductive material such as a synthetic resin. In the impact tool 1A shown in Fig. 2, other terminals for signal transmission (terminals 24 to 26 shown in (A) and (B) of Fig. 7 which will be described later) are not provided between the positive electrode input terminal 22 and the negative electrode input terminal 27 of the terminal part 15A. This is because the impact tool 1A shown in Fig. 2 does not require control using other terminals for signal transmission. The terminal part 15A is manufactured by casting a plurality of metal terminals (here, the terminals 22, 27, and 28) in molding the synthetic resin and has a vertical surface 15a which is an abutment surface in an attachment direction (the front-rear direction) and a horizontal surface 15b. The terminal part 15A is fixed to the left and right divided housing 2 to be sandwiched between opening portions (terminal holding portions). The horizontal surface 15b of the terminal part 15A becomes a surface that is close to and faces an upper step surface 115 of the battery pack 101 when the battery pack 101 is attached. A curved portion 12 is formed in front of the horizontal surface 15b to come into contact with a raised portion 132 of the battery pack 101, and a protruding portion 14 is formed near the left-right center of the curved portion 12. The protruding portion 14 also serves as a boss for screwing the housing 2 of the electric device main body 1 (the low-voltage device main body 1A) which is divided into two parts in a left-right direction and serves as a stopper that restricts a relative movement of the battery pack 101 in the attachment direction.

The battery pack 101 accommodates ten lithium-ion battery cells with rated 3.6 V in a case constituted by an upper case 110 and a lower case 102. In the battery pack 101, two cell units each having five battery cells connected in series are prepared, and by connecting the outputs of these cell units in parallel, a direct current of rated 18 V is output. The upper case 110 has a lower step surface 111, the upper surface 115 positioned above the lower step surface 111, and a stepped portion 114 positioned between the lower surface 111 and the upper step surface 115. A plurality of slots 121 to 128 extending rearward from the front stepped portion 114 to the upper step surface 115 is formed in a slot group arrangement region 120 of the battery pack 101. Two rail portions 138a and 138b are formed in side surfaces of the upper step surface 115 of the battery pack 101. The rail portions 138a and 138b are each formed to include a groove whose longitudinal direction is parallel to the attachment direction of the battery pack 101. A groove portion of each of the rail portions 138a and 138b has an open end at a front side end portion and a closed end connected to a front wall surface of the raised portion 132 at a rear side end portion. A latch mechanism is provided in the rail portions 138a and 138b. The latch mechanism includes latch buttons 141a and 141b and latching portions 142a (not visible in the figure) and 142b that move inward in response to the press of the latch buttons 141a and 141b. When the battery pack 101 is removed from the electric device main body 1 (the low-voltage device main body 1A), by the latch buttons 141a and 141b on both left and right sides being pressed, claw-shaped latching portions 142a (not visible in the figure) and 142b are moved inward, and a latched state is released. Therefore, in that state, the battery pack 101 is moved in a direction opposite to the attachment direction.

A stopper portion 131 recessed downward from the raised portion 132 is formed near the center of the low-voltage battery pack 101 sandwiched between the latch buttons 141a and 141b. Since the stopper portion 131 serves as an abutment surface for the protruding portion 14 when the low-voltage battery pack 101 is attached to the battery pack attachment part 10, when the low-voltage battery pack 101 is inserted into the battery pack attachment part 10 until the protruding portion 14 on a side of the electric device main body 1 (the low-voltage device main body 1A) comes into contact with the stopper portion 131, the plurality of terminals (the device side terminals) arranged on the electric device main body 1 (the low-voltage device main body 1A) and a plurality of connection terminals arranged on the low-voltage battery pack 101 (which will be described later with reference to (A) and (B) of Fig. 7 and the like) come into contact with each other and become conductive.

A plurality of slits 134 serving as cooling air intake ports is provided in an inner portion of the stopper portion 131 of the low-voltage battery pack 101. In a state where the low-voltage battery pack 101 is attached to the electric device main body 1, the slits 134 are covered not to be visually recognized from the outside and are in a closed state. When the low-voltage battery pack 101 is connected to a charging device (not shown) for charging, the slits 134 are used as an air vent for forcing cooling air to flow inside the low-voltage battery pack 101. The cooling air taken into the low-voltage battery pack 101 is discharged to the outside through slits 105 provided in a front wall of the lower case 102 and serving as an air vent for exhaust. The slits 134 may be used for exhaust, and the slits 105 may be used for intake.

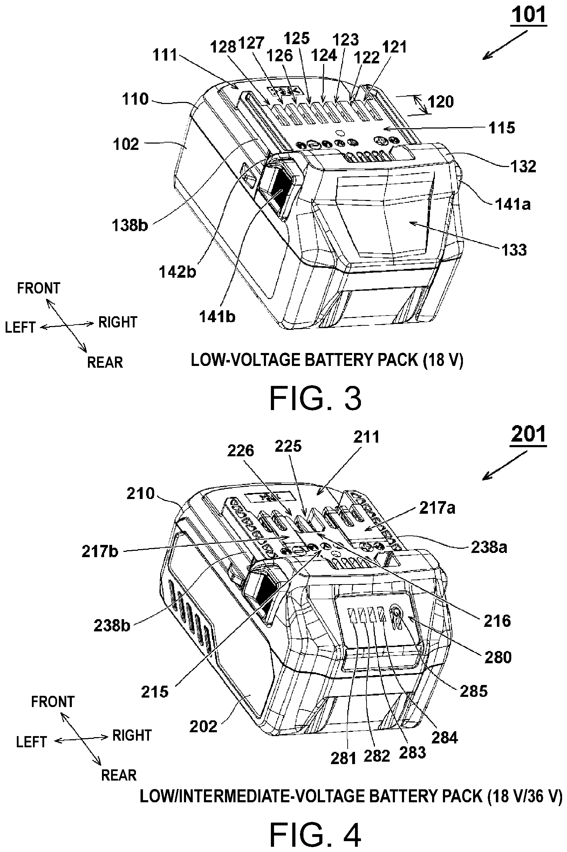

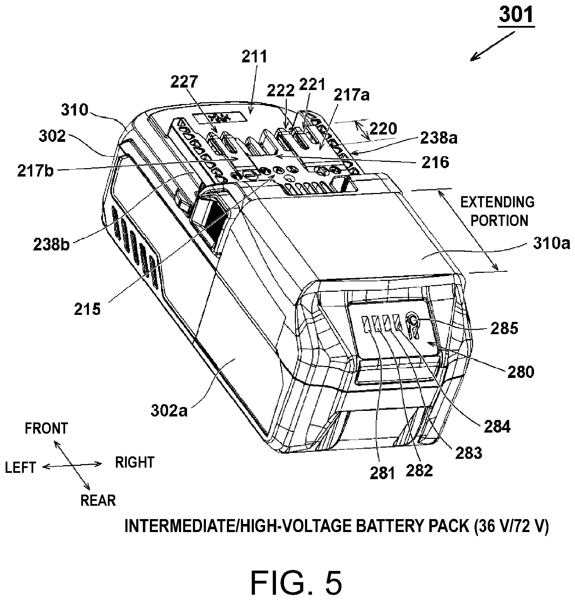

The battery packs 101, 201, and 301 shown in Fig. 1 are formed such that the rail portions 138a and 138b have the same shape, the latch mechanism has the same arrangement, and the plurality of slots 121 to 128 has the same arrangement. That is, the attachment mechanisms of battery packs 101, 201, and 301 are formed to have the compatibility. However, in order to prevent a battery pack on a high voltage side from being erroneously attached to an electric device main body on a low voltage side, a shape for preventing erroneous attachment is partially changed (details will be described later with reference to Figs. 4 and 5).

Fig. 3 is a perspective view of the low-voltage battery pack 101 from another angle. A rear side of the raised portion 132 of the low-voltage battery pack 101 is formed with an inclined surface 133. The two rail portions 138a and 138b are formed in parallel to extend in the front-rear direction. The slot group arrangement region 120 is disposed on the upper step surface 115 sandwiched between the rail portions 138a and 138b, and eight slots 121 to 128 are formed in the slot group arrangement region 120. The slots 121 to 128 are portions cutout to have a predetermined length in a battery pack attachment direction, and the plurality of connection terminals that can be fitted to the device side terminals of the electric device main body 1 or the external charging device (not shown) is arranged inside the cutout portions. The connection terminals on a side of the terminal part 15A can be inserted into the slot 121 to 128 by bringing the terminal part 15A or the like on a side of the electric device main body 1 closer to the slots 121 to 128 from the front.

Of the slots 121 to 128, the slot 121 on a side closer to the right rail portion 138a of the low-voltage battery pack 101 serves as an insertion port for a positive electrode terminal (C+ terminal) for charging, and the slot 122 serves as an insertion port for a positive electrode terminal (+ terminal) for discharging. Further, the slot 127 on a side closer to the left rail portion 138b of the low-voltage battery pack 101 serves as an insertion port for a negative electrode terminal (- terminal). A plurality of signal terminals for signal transmission used for controlling the low-voltage battery pack 101, the electric device main body 1, and the external charging device (not shown) is disposed between the positive electrode terminal and the negative electrode terminal. Here, four slots 123 to 126 for the signal terminals are provided between power terminals of a power terminal group. The slot 123 is a spare terminal insertion port, and in the present embodiment, instead of providing a metal terminal, a synthetic resin partition plate 47 (which will be described later with reference to (A) and (B) of Fig. 7) is inserted into the slot 123.

The slot 124 is an insertion port for a T terminal for outputting a signal that serves as identification information of the low-voltage battery pack 101 to the electric device main body or the charging device. The slot 125 is an insertion port for a V terminal for receiving a control signal from an external charging device (not shown). The slot 126 is an insertion port for an LS terminal for outputting battery temperature information from a thermistor (a temperature detecting element) (not shown) provided in contact with the cell. The slot 128 for an LD terminal that outputs an abnormal stop signal from a battery cell protection circuit is provided on a left side of the slot 127 that serves as an insertion port for the negative electrode terminal (-terminal).

The lower case 102 has a substantially rectangular parallelepiped shape with an open upper surface and is constituted by a bottom surface, a front wall extending in a direction perpendicular to the bottom surface, a rear wall, a right side wall, and a left side wall. In Fig. 2(B), in front of the latch button 141b, the latching portion 142b projects in a left direction within the rail portion 138b due to an action of a spring and engages with a recess (not shown) formed in the rail portion 11a of the electric device main body 1 (the low-voltage device main body 1A), and thus the low-voltage battery pack 101 is prevented from falling off from the low-voltage device main body 1A. A similar latching portion 142a is also provided in the right rail portion 138a.

Fig. 4 is a perspective view showing an appearance of the low/intermediate-voltage battery pack 201. The appearance of the low/intermediate-voltage battery pack 201 has almost the same shape as the low-voltage battery pack 101 except for a portion where a display part 280 is provided, and a plurality of slots (225, 226, and the like) is formed in an upper case 210. The left-right width and the front-rear length of the plurality of slots are the same size as those of the low-voltage battery pack 101 shown in Fig. 3. Battery cells are accommodated in a case constituted by the upper case 210 and a lower case 202. Since the total number of the battery cells accommodated inside the lower case 202 is 10, the low/intermediate-voltage battery pack 201 can be realized with a housing having the same size as the low-voltage battery pack 101 shown in Fig. 3. A difference between the lower case 102 in Fig. 3 and the lower case 202 in Fig. 4 is mainly due to a difference in design. In the low/intermediate-voltage battery pack 201, shapes of rail portions 238a and 238b, a latch, a raised portion, and a lower step surface 211 are the same as those of the low-voltage battery pack 101 such that the low/intermediate-voltage battery pack 201 can be attached not only to the intermediate-voltage device main body 31 but also to the low-voltage device main body 1. A slight difference is that in an upper step surface 215, a recess 216 is formed to be recessed downward from above and protrusions 217a and 217b that slightly protrude upward from below are formed to accommodate a connection terminal group (a power terminal group of 261, 262, 267, 271, 272, and 277, which will be described later with reference to (A) and (B) of Fig. 7). The recess 216 is configured to correspond to the protrusion 48 (see (A) and (B) of Fig. 8, which will be described later) for preventing erroneous attachment, which is formed on a terminal part 45 of the intermediate-voltage device main body 31. In other words, in a case where an electric device main body has the protrusion 48 for preventing erroneous attachment (here, the intermediate-voltage device main body 31 and the high-voltage device main body 61), the electric device main body cannot be attached to the low-voltage battery pack 101 that does not have the recess 216.

The display part 280 is provided on a rear inclined surface of the low/intermediate-voltage battery pack 201. The display part 280 is provided with four display windows 281 to 284, and a push button type switch button 285 is provided on a right side of the display window 284. The switch button 285 is an operation part operated by the user. Light emitting diodes (LEDs) (not shown) are disposed inside the display windows 281 to 284 and are lit from the inside of the display windows 281 to 284. The display part 280 is entirely covered with a laminate film, and the display windows 281 to 284 are configured to transmit light by making a part of a printed laminate film transparent or translucent. The switch button 285 is a button operated by the user. When the switch button 285 is pressed, a display of a remaining battery level is performed on the display windows 281 to 284 according to a remaining battery level of the low/intermediate-voltage battery pack 201.

Fig. 5 is a perspective view showing an appearance of the intermediate/high-voltage battery pack 301. The appearance of the intermediate/high-voltage battery pack 301 is such that an extending portion 310a is formed in an upper case 310 and an extending portion 302a is formed in the lower case 302 because the number of battery cells to be accommodated is twice as compared with the low/intermediate-voltage battery pack 201 (from 10 cells to 20 cells). The shape of the portions other than the extending portions 302a and 310a is compatible with the low/intermediate-voltage battery pack 201 (almost the same shape). The display part 280 is disposed on the rear side of the upper case 310. Since the front side of the extending portion 310a of the upper case 310 has the same shape as the low/intermediate-voltage battery pack 201, the same reference signs as in the low/intermediate-voltage battery pack 201 are given. The shape of the recess 216 recessed downward from above in the upper step surface 215 of the intermediate/high-voltage battery pack 301 is the same as that of the low/intermediate-voltage battery pack 201. If the recess 216 has a common shape in this way, it means that the low/intermediate-voltage battery pack 201 can be attached to the high-voltage device main body 61. Optionally, the low/intermediate-voltage battery pack 201 can be configured so that it cannot be physically attached to the high-voltage device main body 61 by further changing the shape of the recess 216 or providing another erroneous attachment prevention mechanism.

(A) of Fig. 6 is a connection circuit diagram of positive electrode terminals (262 and 272) and negative electrode terminals (267 and 277) of the low/intermediate-voltage battery pack 201 and the positive electrode input terminal 22 and the negative electrode input terminal 27 of the low-voltage device main body 1, and (B) of Fig. 6 is a connection circuit diagram of the positive electrode terminals (262 and 272) and the negative electrode terminals (267 and 277) of the low/intermediate-voltage battery pack 201 and a positive electrode input terminal 52, a negative electrode input terminal 57, and a short-circuiting bar 59 of the intermediate-voltage device main body 31. The positive electrode terminals for power output of the low/intermediate-voltage battery pack 201 are constituted by two positive electrode terminals of an upper positive electrode terminal 262 and a lower positive electrode terminal 272. Further, the negative electrode terminals of the low/intermediate-voltage battery pack 201 are constituted by two negative electrode terminals of an upper negative electrode terminal 267 and a lower negative electrode terminal 277. In a state where the low/intermediate-voltage battery pack 201 is not attached to any of the electric device main bodies, the charging device, or the like (when not attached), the upper positive electrode terminal 262 and the lower positive electrode terminal 272 are in a non-contact state, that is, in a non-conducting state, and the upper negative electrode terminal 267 and the lower negative electrode terminal 277 are in a non-contact state, that is, in a non-conducting state.

Inside the low/intermediate-voltage battery pack 201, five battery cells 245a to 245e are connected in series to form a first cell unit 245, and five battery cells 246a to 246e are connected in series to form a second cell unit 246. A positive electrode side output of the first cell unit 245 (a positive electrode of the battery cell 245a) is connected to the upper positive electrode terminal 262, and a negative electrode side output of the first cell unit 245 (a negative electrode of the battery cell 245e) is connected to the lower negative electrode terminal 277. Similarly, a positive electrode side output of the second cell unit 246 (a positive electrode of the battery cell 246a) is connected to the lower positive electrode terminal 272, and a negative electrode side output of the second cell unit 246 (a negative electrode of the battery cell 246e) is connected to the upper negative electrode terminal 267.

As shown in Fig. 2, a group of a plurality of output terminals (the device side connection terminals) for connection with the battery packs 101 and 201 is formed in the low-voltage device main body 1, and the group of a plurality of output terminals includes the positive electrode input terminal 22 and the negative electrode input terminal 27. The positive electrode input terminal 22 is made of a flat metal plate having an effective length H in a vertical direction to be able to come into contact with both claw portions (262a and 272a) of the positive electrode terminals 262 and 272 disposed to be spaced apart vertically. Similarly, the negative electrode input terminal 27 is made of a flat metal plate having an effective length H in a vertical direction to be able to come into contact with both claw portions (267a and 277a) of the negative electrode terminals 267 and 277 disposed to be spaced apart vertically. Since the low-voltage device main body 1 has such a positive electrode input terminal 22 and a negative electrode input terminal 27, as shown in (A) of Fig. 6, when the low/intermediate-voltage battery pack 201 is attached to the low-voltage device main body 1, the first cell unit 245 and the second cell unit 246 are connected in parallel between the positive electrode input terminal 22 and the negative electrode input terminal 27 of the low-voltage device main body 1, and the voltage of the two cell units connected in parallel, that is, a direct current of rated 18 V is output therebetween.

A group of a plurality of output terminals (the device side connection terminals) for connection with the low/intermediate-voltage battery pack 201 is formed in the intermediate-voltage device main body 31, and the group of a plurality of output terminals includes the positive electrode input terminal 52, the negative electrode input terminal 57, and the short-circuiting bar 59. In a case where the intermediate-voltage device main body 31 is connected to the intermediate/high-voltage battery pack 301 of the present embodiment, the positive electrode input terminal 52 and the negative electrode input terminal 57 correspond to an intermediate voltage parallel terminal that connects a plurality of cell units of the battery pack 301 in parallel. The positive electrode input terminal 52 is configured to be able to come into contact with only the claw portions (262a and 262b, here 262b is not visible in the figure) of the upper positive electrode terminal 262, and the negative electrode input terminal 57 is configured to be able to come into contact with only the claw portions (267a and 267b, here 267b is not visible in the figure) of the upper negative electrode terminal 267. As can be seen from (B) of Fig. 6, in the terminal part 45 (see (A) and (B) of Fig. 8, which will be described later for a reference sign) having an effective length H in a vertical direction, a height H₁ of each of the positive electrode input terminal 52 and the negative electrode input terminal 57 is less than a half of the height H of (A) of Fig. 6. The short-circuiting bar 59 of the intermediate-voltage device main body 31 is a short circuit element made of a metal conductive member and is a member bent in a U shape. A terminal portion 59b is formed on one end side of a short-circuiting terminal portion 59a of the short-circuiting bar 59 and is disposed below the positive electrode input terminal 52. A terminal portion 59c is formed on the other end side of the short-circuiting terminal portion 59a of the short-circuiting bar 59, and the terminal portion 59c is disposed below the negative electrode input terminal 57. The terminal portion 59b is fitted to the lower positive electrode terminal 272, and the terminal portion 59c is fitted to the lower negative electrode terminal 277. That is, the terminal portions 59b and 59c of the short-circuiting bar 59 serve as an intermediate voltage series terminal that connects the plurality of cell units of the present invention in series. The short-circuiting bar 59 is cast in a synthetic resin base portion 46 (which will be described later with reference to (A) and (B) of Fig. 8) together with other device side terminals such as the positive electrode input terminal 52 and the negative electrode input terminal 57 to be fixed thereto. At this time, the short-circuiting bar 59 is in an electrically insulated state because it does not come into contact with other metal terminals (52, 54 to 58). Further, since the short-circuiting bar 59 is used to short-circuit the lower positive electrode terminal 272 and the lower negative electrode terminal 277, there is no need to connect a wire to a control circuit of the intermediate-voltage device main body 31 or the like. The terminal portion 59b of the short-circuiting bar 59 is configured to be able to be fitted to the claw portions (272a and 272b, here 272b is not visible in the figure) of the lower positive electrode terminal 272, and the terminal portion 59c thereof is configured to be able to come into contact with only the claw portions (277a and 277b, here 277b is not visible in the figure) of the lower negative electrode terminal 277. Here, a height H₂ of each of the terminal portions 59b and 59c of the short-circuiting bar 59 is less than a half of the height H in (A) of Fig. 6. That is, the positive electrode terminal (52, 59b) and the negative electrode terminal portion (57, 59b) of the intermediate-voltage device main body 31 are provided in a region of the positive electrode terminal (22) and the negative electrode terminal (27) of the low-voltage device main body 1 in a height direction. In this way, as shown in (B) of Fig. 6, when the low/intermediate-voltage battery pack 201 is attached to the intermediate-voltage device main body 31, the voltage of the first cell unit 245 and the second cell unit 246 connected in series, that is, a direct current of rated 36 V is output between the positive electrode input terminal 52 and the negative electrode input terminal 57 of the intermediate-voltage device main body 31.

(A) and (B) of Fig. 7 are views for explaining a connection state between a terminal part 15 of the low-voltage device main body 1 and a connection terminal group 260 of the low/intermediate-voltage battery pack 201. The low/intermediate-voltage battery pack 201 includes a circuit board 250, and upper positive electrode terminals 261 and 262, a T terminal 264, a V terminal 265, an LS terminal 266, an upper negative electrode terminal 267, and an LD terminal 268 as connection terminals on a side of the battery pack 201 are fixed to the circuit board 250. In fixing these terminals, leg portions of each connection terminal passes through the circuit board 250 and are soldered on a back side of the circuit board 250. The circuit board 250 is further provided with lower positive electrode terminals 271 and 272 (272 is not visible in the figure) and a lower negative electrode terminal 277.

The terminal part 15 is included in the low-voltage device main body 1. In the terminal part 15 shown in Fig. 2, all connection terminals are not shown, but in (A) of Fig. 7, all connection terminals are shown. The terminal part 15 is provided with the positive electrode input terminal 22, a T terminal 24, a V terminal 25, an LS terminal 26, the negative electrode input terminal 27, and an LD terminal 28. The terminal part 15 is manufactured by casting these metal terminals in a synthetic resin base portion 16. Terminal portions 22c, 24c to 28c of the connection terminals are exposed above the base portion 16. A partition plate 17 made of a synthetic resin is formed between the positive electrode input terminal 22 and the T terminal 24. The partition plate 17 is made of the same member as the base portion 16, or is made by casting another non-conductive plate member.

(B) of Fig. 7 is a view showing a state in which the terminal part 15 and the connection terminal group 260 are fitted to each other. Here, the illustration of the synthetic resin base portion 16 of the terminal part 15 is omitted in order to show a connection state between the metal terminals. In this state, a connection state between the positive electrode input terminal 22 and the upper positive electrode terminal 262 and the lower positive electrode terminal 272, and a connection state between the negative electrode input terminal 27 and the upper negative electrode terminal 267 and the lower negative electrode terminal 277 are the same as the contact states shown in (A) of Fig. 6. When the low-voltage device main body 1 is connected to the low/intermediate-voltage battery pack 201 in this way, it becomes the contact state shown in (A) of Fig. 6, and a power of rated 18 V is supplied to the low-voltage device main body 1.

(A) and (B) of Fig. 8 are views for explaining a connection state between a terminal part 45 of the intermediate-voltage device main body 31 and the connection terminal group 260 of the low/intermediate-voltage battery pack 201. The structure of the circuit board 250 and the connection terminal group 260 provided thereon is the same as in (A) and (B) of Fig. 7. The terminal part 45 is formed by casting device side terminals such as the positive electrode input terminal 52 and the negative electrode input terminal 57 in the same manner as the low-voltage device main body 1 shown in (A) and (B) of Fig. 7 and by further casting a U-shaped bent metal plate (the short-circuiting bar 59) in the base portion 46. One end portion of the U-shaped bent metal plate serves as the short-circuiting terminal portion 59b, and the other end portion thereof serves as the short-circuiting terminal portion 59c. By the short-circuiting bar 59 being disposed, the positive electrode input terminal 52 and the negative electrode input terminal 57 are configured to each have a vertical width less than a half (less than H/2) of the height of the input terminal (22, 27) shown in (A) of Fig. 6. When the low/intermediate-voltage battery pack 201 is simply attached to the terminal part 45 having such a shape, it becomes a state shown in (B) of Fig. 8, and a direct current power of rated 36 V is supplied to the positive electrode input terminal 52 and the negative electrode input terminal 57. Since the terminal part 45 having a short circuit (59) in the intermediate-voltage device main body 31 is provided in this way, when the low/intermediate-voltage battery pack 201 of the present embodiment having two positive electrode terminals (262, 272) and two negative electrode terminals (267, 277) is simply attached to the terminal part 45, it is possible to establish a series connection circuit of a first cell unit 145 and a second cell unit 146. In addition, an output voltage from the low/intermediate-voltage battery pack 201 can be automatically switched depending on the shape of the terminal part 45 on a side of the intermediate-voltage device main body 31 to which the low/intermediate-voltage battery pack 201 is attached.

The protrusion 48 is formed on the terminal part 45 to protrude downward. A left-right width and a front-rear length of the protrusion 48 correspond to a left-right width and a front-rear length of the recess of the recess 216 of the low/intermediate-voltage battery pack 201. The protrusion 48 is a so-called erroneous attachment prevention portion that prevents attachment to a battery pack (here, the low-voltage battery pack 101) that is not suitable to the intermediate-voltage device main body 31 having the terminal part 45. As shown in Fig. 4, the recess 216 corresponding to the protrusion 48 is formed in the low/intermediate-voltage battery pack 201. Therefore, the low/intermediate-voltage battery pack 201 (see Fig. 4) having the recess 216 and the intermediate/high-voltage battery pack 301 (see Fig. 5) having the recess 216 can be attached to the intermediate-voltage device main body 31 in which the protrusion 48 is formed. On the other hand, the low-voltage battery pack 101 in which the protrusion 48 is not formed cannot be attached to the low/intermediate-voltage battery pack 201.

(B) of Fig. 8 is a view showing a state in which the terminal part 45 and the connection terminal group 260 are fitted to each other. Here, the illustration of the synthetic resin base portion 46 of the terminal part 45 is omitted in order to show a connection state between the metal terminals. In this state, a connection state between the positive electrode input terminal 52 and the upper positive electrode terminal 262, a connection state between the lower positive electrode terminal 272 and the short-circuiting terminal portion 59b of the short-circuiting bar 59, a connection state between the negative electrode input terminal 57 and the upper negative electrode terminal 267, and a connection state between the lower negative electrode terminal 277 and the short-circuiting terminal portion 59c of the short-circuiting bar 59 are the same as the contact states shown in (B) of Fig. 6. When the low/intermediate-voltage battery pack 201 is attached to the intermediate-voltage device main body 31 in this way, a power of rated 36 V is supplied to the intermediate-voltage device main body 31.

(A) of Fig. 9 is a connection circuit diagram of positive electrode terminals (362 and 372) and negative electrode terminals (367 and 377) of the intermediate/high-voltage battery pack 301 and the positive electrode input terminal 52 and the negative electrode input terminal 57 of the intermediate-voltage device main body 31 and the short-circuiting bar 59, and (B) of Fig. 6 is a connection circuit diagram of the positive electrode terminals (362 and 372) and the negative electrode terminals (367 and 377) of the intermediate/high-voltage battery pack 301 and a positive electrode input terminal 82, a negative electrode input terminal 87, and a short-circuiting bar 89 of the high-voltage device main body 61. The positive electrode terminals for power output of the intermediate/high-voltage battery pack 301 are constituted by two positive electrode terminals of an upper positive electrode terminal 362 and a lower positive electrode terminal 372. Further, the negative electrode terminals of the intermediate/high-voltage battery pack 301 are constituted by two negative electrode terminals of an upper negative electrode terminal 367 and a lower negative electrode terminal 377. Claw portions (for example, 362a, 372a, 367a, and 377a) of these terminals each have a vertical height less than a half of the height of the claw portions (for example, 262a, 262b, 267a, and 277a shown in (A) of Fig. 8) of the power terminals (the upper positive electrode terminal 262, the lower positive electrode terminal 272, the upper negative electrode terminal 267, and the lower negative electrode terminal 277) of the low/intermediate-voltage battery pack 201 and each have a terminal shape elongated in the attachment direction of the battery pack. In a state where the intermediate/high-voltage battery pack 301 is not attached to any of the electric device main bodies 1, the charging device, or the like (when not attached), the upper positive electrode terminal 362 and the lower positive electrode terminal 372 are in a non-contact state, and the upper negative electrode terminal 367 and the lower negative electrode terminal 377 are in a non-contact state (a detailed structure will be described later with reference to (A) to (C) of Fig. 11).

Inside the intermediate/high-voltage battery pack 301, ten battery cells are connected in series to form a first cell unit 345, and ten battery cells are connected in series to form a second cell unit 346. An output of each cell unit is rated 36 V A positive electrode side output of the first cell unit 345 is connected to the lower positive electrode terminal 372, and a negative electrode side output of the first cell unit 345 is connected to the upper negative electrode terminal 367. The lower positive electrode terminal 372 and the upper negative electrode terminal 367 form a pair of first output terminals. Similarly, a positive electrode side output of the second cell unit 346 is connected to the upper positive electrode terminal 362, and a negative electrode side output of the second cell unit 346 is connected to the lower negative electrode terminal 377. The upper positive electrode terminal 362 and the lower negative electrode terminal 377 form a pair of first output terminals.

As shown in (A) of Fig. 9, when the intermediate/high-voltage battery pack 301 is attached to the intermediate-voltage device main body 31, the positive electrode input terminal 52 is fitted to the upper positive electrode terminal 362 and the lower positive electrode terminal 372 at the same time, and the negative electrode input terminal 57 is fitted to the upper negative electrode terminal 367 and the lower negative electrode terminal 377 at the same time. At this time, the short-circuiting bar 59 is in a non-contact state with respect to any of the power terminals (the upper positive electrode terminal 362, the lower positive electrode terminal 372, the upper negative electrode terminal 367, and the lower negative electrode terminal 377) and any of signal terminals (364 to 366, and 368, which will be described later in (A) and (B) of Fig. 10) and is kept in an electrically floating state. Thus, in a connection state of (A) of Fig. 9, a parallel connection circuit of the first cell unit 345 and the second cell unit 346 is formed, and a direct current of rated 36 V is output.

A group of a plurality of output terminals (the device side connection terminals) for connection with the battery packs 201 and 301 is formed in the high-voltage device main body 61, and the group of a plurality of output terminals includes the positive electrode input terminal 82, the negative electrode input terminal 87, and the short-circuiting bar 89. The positive electrode input terminal 82 constitutes a first input terminal, and the negative electrode input terminal 87 constitutes a second input terminal. The positive electrode input terminal 82 is configured to be able to come into contact with only the claw portions (362a and 362b, here 362b is not visible in the figure) of the upper positive electrode terminal 362, and the negative electrode input terminal 87 is configured to be able to come into contact with only the claw portions (367a and 367b, here 367b is not visible in the figure) of the upper negative electrode terminal 367. As can be seen from (B) of Fig. 9, in a terminal part 75 (see (A) and (B) of Fig. 11, which will be described later for a reference sign) having an effective length H in a vertical direction, a height H₃ of each of the positive electrode input terminal 82 and the negative electrode input terminal 87 is less than 1/4 of the height H of (A) of Fig. 6. The short-circuiting bar 89 of the high-voltage device main body 61 is a short circuit element made of a metal conductive member and is an elongated member bent in a U shape. A terminal portion 89b is formed on one end side of a connection portion 89a of the short-circuiting bar 89 and is disposed below the positive electrode input terminal 82. A terminal portion 89c is formed on the other end side of the connection portion 89a of the short-circuiting bar 89, and the terminal portion 89c is disposed below the negative electrode input terminal 87. The terminal portion 89b is fitted to the lower positive electrode terminal 372, and the terminal portion 89c is fitted to the lower negative electrode terminal 377. That is, the terminal portions 89b and 89c of the short-circuiting bar 89 serve as a high voltage series terminal that connects the plurality of cell units of the present invention in series.

The short-circuiting bar 89 is cast in a synthetic resin base portion 76 (which will be described later with reference to (A) and (B) of Fig. 11) together with other device side terminals such as the positive electrode input terminal 82 and the negative electrode input terminal 87 to be fixed thereto. Since the short-circuiting bar 89 is used to short-circuit the lower positive electrode terminal 372 and the lower negative electrode terminal 377, there is no need to connect a wire to a control circuit of the high-voltage device main body 61 or the like. The terminal portion 89b of the short-circuiting bar 89 is configured to be able to be fitted to the claw portions (372a and 372b, here 372b is not visible in the figure) of the lower positive electrode terminal 372, and the terminal portion 89c thereof is configured to be able to come into contact with only the claw portions (377a and 377b, here 377b is not visible in the figure) of the lower negative electrode terminal 377. Here, a height of each of the terminal portions 89b and 89c of the short-circuiting bar 89 is less than 1/4 of the height H in (A) of Fig. 6. That is, the positive electrode terminal (82, 89b) and the negative electrode terminal portion (87, 89b) of the high-voltage device main body 61 are provided in a range of a half of the positive electrode terminal (22) and the negative electrode terminal (27) of the low-voltage device main body 1 in the height direction, and each two connection terminals (362 and 372, 367 and 377) are provided in the range. In this way, as shown in (B) of Fig. 9, when the intermediate/high-voltage battery pack 301 is attached to the high-voltage device main body 61, the voltage of the first cell unit 345 and the second cell unit 346 connected in series, that is, a direct current of rated 72 V is output between the positive electrode input terminal 82 and the negative electrode input terminal 87 of the high-voltage device main body 61.

(A) and (B) of Fig. 10 are views for explaining a connection state between the terminal part 45 of the intermediate-voltage device main body 31 and a connection terminal group 360 of the intermediate/high-voltage battery pack 301. The intermediate/high-voltage battery pack 301 includes a circuit board 350. As connection terminals on a side of the battery pack 301, upper positive electrode terminals 361 and 362, lower positive electrode terminals 371 and 372, a T terminal 364, a V terminal 365, an LS terminal 366, an upper negative electrode terminal 367, a lower negative electrode terminal 377, and an LD terminal 368 are fixed to the circuit board 350. A group of terminals for signal transmission, that is, the T terminal 364, the V terminal 365, the LS terminal 366, and the LD terminal 368 may use the same metal component as the T terminal 264, V terminal 265, the LS terminal 266, and the LD terminal 268 of the low/intermediate-voltage battery pack 201 shown in (A) of Fig. 7. In fixing these power terminals or these signal terminals, leg portions of each terminal passes through holes of the circuit board 350 and are soldered on a back side of the circuit board 350. The upper positive electrode terminal 361 and the lower positive electrode terminal 371 are charging terminals connected to a charger and are not connected to the connection terminals of the intermediate-voltage device main body 31.

The terminal part 45 is provided with the positive electrode input terminal 52, a T terminal 54, a V terminal 55, an LS terminal 56, the negative electrode input terminal 57, and an LD terminal 58. The terminal part 45 is manufactured by casting these metal terminals in a synthetic resin base portion 46. Connection portions 52c, 54c, 55c, 56c, 57c, and 58c, each of which is a part of each terminal component, are exposed above the base portion 46. For example, the positive electrode input terminal 52 is connected to the connection portion 52c, and the negative electrode input terminal 57 is connected to the terminal portion 57c. A partition plate 47 made of a synthetic resin is formed between the positive electrode input terminal 52 and the T terminal 54. The partition plate 47 is made of the same member as the base portion 46, or is made by casting another non-conductive plate member. The protrusion 48 for preventing erroneous attachment is formed on the terminal part 45.

(B) of Fig. 10 is a perspective view showing a state in which the terminal part 45 and the connection terminal group 360 are fitted to each other. The intermediate/high-voltage battery pack 301 has a pair of first output terminals (the lower positive electrode terminal 372 and the upper negative electrode terminal 367) extending upward from the circuit board 350 and connected to a positive electrode and a negative electrode of one of the plurality of cell units, and a pair of second output terminals (the upper positive electrode terminal 362 and the lower negative electrode terminal 377) extending upward from the circuit board 350 and connected to a positive electrode and a negative electrode of another of the plurality of cell units. As shown in (A), the pair of first output terminals and the pair of second output terminals each have a connection portion connected to the input terminal (the positive electrode input terminal 52, the negative electrode input terminal 57) of the intermediate-voltage device main body 31, and an avoidance portion that is positioned between the connection portion and the board and avoids the intermediate voltage series terminal. As can be understood here, the short-circuiting terminal portion 59b of the short-circuiting bar 59 is positioned in the avoidance portion where the terminal portions of the first and second output terminals are not present and is in a state in which it does not come into contact with either the upper positive electrode terminal 362 or the lower positive electrode terminal 372. Although not visible in the figure, the short-circuiting terminal portion 59c of the short-circuiting bar 59 is also in an insulated state in which it does not come into contact with either the upper negative electrode terminal 367 or the lower negative electrode terminal 377. Accordingly, in this connection state, the voltage of the first cell unit 345 and the second cell unit 346 connected in parallel, that is, a direct current of rated 36 V is output between the positive electrode input terminal 52 and the negative electrode input terminal 57. In this way, instead of the low/intermediate-voltage battery pack 201, the intermediate/high-voltage battery pack 301 can be attached to the intermediate-voltage device main body 31. Although not shown in (B) of Fig. 10, a synthetic resin cover may be attached to a lower half of the lower positive electrode terminal 372 or a resin such as silicone may be applied to the vicinity of a lower side of the lower positive electrode terminal 372, such that the short-circuiting terminal portion 59b of the short-circuiting bar 59 and the lower positive electrode terminal 372 do not come into contact with each other. Similarly, lower halves of the lower positive electrode terminal 371 and the lower negative electrode terminal 377 may be also provided with any insulating means such as a synthetic resin cover such that the short-circuiting bar 59 cannot be conducted to the lower positive electrode terminal 372 and the lower negative electrode terminal 377. That is, the insulating means may be provided between the positive electrode terminal and the negative electrode terminal such that the short-circuiting bar 59 does not come into contact with them.

(A) of Fig. 11 is a view showing a terminal part 75 of the high-voltage device main body 61 and the connection terminal group 360 of the intermediate/high-voltage battery pack 301, and a configuration of the connection terminal group 360 or the like is the same as the configuration shown in (A) and (B) of Fig. 10. The terminal part 75 includes the positive electrode input terminal 82 and the negative electrode input terminal 87 which are configured to have a very small vertical height as compared with the positive electrode input terminal 52 and the negative electrode input terminal 57 of the intermediate-voltage device main body 31 shown in (A) and (B) of Fig. 10. A U-shaped bent metal plate (the short-circuiting bar 89) is provided below the positive electrode input terminal 82 and the negative electrode input terminal 87, a short-circuiting terminal portion 89b thereof is provided below the positive electrode input terminal 82, and a short-circuiting terminal portion 89c thereof is provided below the negative electrode input terminal 87. In this way, the positive electrode input terminal 82, the negative electrode input terminal 87, and the short-circuiting bar 89 are all positioned at the connection portions where the arm portions (362a, 362b, and the like) of the first and second output terminals are positioned. A portion where the short-circuiting terminal portions 59b and 59c of the short-circuiting bar 59 of (A) and (B) of Fig. 10 are positioned serves as an avoidance portion, a metal terminal is not provided, and the corresponding portion of the terminal part 75 is covered with a resin.

(B) of Fig. 11 is a view showing the shapes of the connection terminals (82, 84 to 88) and the short-circuiting bar 89 which are cast in the base portion 76 with the illustration of the resin portion of the terminal part 45 omitted. A T terminal 84, a V terminal 85, an LS terminal 86, and an LD terminal 88, which are terminals for signal transmission, have the same shape as the T terminal 54, the V terminal 55, the LS terminal 56, and the LD terminal 58 shown in (A) and (B) of Fig. 10. Connection portions 84c, 85c, 86c, and 88c communicating with the T terminal 84, the V terminal 85, the LS terminal 86, and the LD terminal 88 are formed on an upper side of the base portion 76. Connection portions 82c and 87c communicating with the positive electrode input terminal 82 and the negative electrode input terminal 87 via connecting portions 82b and 87b (see (B) and (C) of Fig. 13, 87b is not visible) are also formed on the upper side of the base portion 76. The short-circuiting bar 89 is a metal piece bent into a U-shape and does not need to be connected to an electrical circuit on a side of the high-voltage device main body 61, and thus a terminal such as the connection portion 84c is not formed in the short-circuiting bar 89. When the intermediate/high-voltage battery pack 301 is attached to the high-voltage device main body 61, the positive electrode input terminal 82 is fitted between the arm portions 362 a and 362 b of the upper positive electrode terminal 362, and the negative electrode input terminal 87 is fitted between the arm portions 367a and 367b of the upper negative electrode terminal 367. At the same time, the short-circuiting terminal portion 89b of the short-circuiting bar 89 is fitted between the arm portions 372a and 372b (see (A) to (C) of Fig. 11 for reference signs) of the lower positive electrode terminal 372, and the short-circuiting terminal portion 89c is fitted between the arms 377a and 377b (see (A) to (C) of Fig. 11 for reference signs) of the lower negative electrode terminal 377.

Fig. 12 is a view showing a state in which the terminal part 75 and the connection terminal group 360 are fitted to each other. In this state, a connection state between the positive electrode input terminal 82 and the upper positive electrode terminal 362, a connection state between the lower positive electrode terminal 372 and the short-circuiting terminal portion 89b of the short-circuiting bar 59, a connection state between the negative electrode input terminal 87 and the upper negative electrode terminal 367, and a connection state between the lower negative electrode terminal 377 and the short-circuiting terminal portion 89c of the short-circuiting bar 89 are the same as the contact states shown in (B) of Fig. 9. When the intermediate/high-voltage battery pack 301 is attached to the high-voltage device main body 61 in this way, it becomes the contact state shown in (B) of Fig. 9, and a power of rated 72 V is supplied to the high-voltage device main body 61.

(A) to (C) of Fig. 11 are perspective views of the terminal part 75 and the connection terminal group 360 of Fig. 12 in another direction (at the time of fitting). Illustration of the base portion 76 (see Fig. 12) of the terminal part 75 is omitted. In (A) of Fig. 13, the positive electrode input terminal 82 and the negative electrode input terminal 87 of the terminal part 75 each have a small vertical width (excluding a portion covered with the base portion 76 (see Fig. 12) which is a resin portion) and each have a height less than 1/4 of the height of the input terminals 22 and 27 of the low-voltage device main body 1 and less than a half of the height of the input terminals 52 and 57 of the intermediate-voltage device main body 31. The short-circuiting bar 89 bent into a substantially U shape is provided below the positive electrode input terminal 82 and the negative electrode input terminal 87. The short-circuiting bar 89 has a small vertical height, but has the same left-right direction width and front-rear direction length as the short-circuiting bar 59 (see (B) of Fig. 10) included in the intermediate-voltage device main body 31. The vertical size of the short-circuiting bar 89 is less than a half of the size of the short-circuiting bar 59 (see (B) of Fig. 10). A role of the short-circuiting bar 89 is the same as that of the short-circuiting bar 59 included in the intermediate-voltage device main body 31 and electrically short-circuits the lower positive electrode terminal 372 and the lower negative electrode terminal 377 by being fitted to them.

(B) of Fig. 13 is a partially enlarged view of the positive electrode input terminal 82 and the terminal portion 89b of the short-circuiting bar 89. The positive electrode input terminal 82 is connected to the connection portion 82c via the connecting portion 82b. A vertical cross-sectional shape of the short-circuiting bar 89 extending in the vertical and left-right directions below the positive electrode input terminal 82 is a square, and a bottom surface of the terminal portion 82a of the positive electrode input terminal 82 and an upper surface of the short-circuiting terminal portion 89b of the short-circuiting bar 89 are in parallel with a gap therebetween. In (B) of Fig. 13, the positive electrode input terminal 82 is extracted and illustrated, but the shape of the negative electrode side of the terminal part 75 is simply symmetrical with the positive electrode side thereof, and thus the shapes of the terminal portion 87c of the negative electrode input terminal 87 and the terminal portion 89c of the short-circuiting bar 89 are the same as the shapes of the positive electrode input terminal 82 and the terminal portion 89b.

(C) of Fig. 13 is a view of the positive electrode terminals 362 and 372 of (A) of Fig. 13 from the right. The upper positive electrode terminal 362 has two elongated arm portions 362a and 362b (not visible in the figure) extending forward from left and right side surfaces near an upper end, and the lower positive electrode terminal 372 has two elongated arm portions 372a, 372b (not visible in the figure) extending forward from left and right side surfaces near an upper end. The vertical positions of the arm portions 362a and 362b are the same, and the vertical positions of the arm portions 372a and 372b are the same. The arm portion 362a and the arm portion 372a are spaced with a certain distance therebetween in the vertical direction, and thus they are in an electrically insulated state when not connected to the battery pack or the external charger. The arm portions 362b and 372b, which are not visible in the figure, are also in an electrically insulated state when not connected to the battery pack or the external charger. In (C) of Fig. 13, the positive electrode input terminal 82 is fitted between the arm portions 362a and 362b, and the terminal portion 89b of the short-circuiting bar 89 is fitted between the arm portions 372a and 372b. At this time, the upper positive electrode terminal 362 and the lower positive electrode terminal 372 are not electrically connected to each other because they are spaced with a predetermined gap therebetween. Similarly, on the negative electrode terminal side, the upper negative electrode terminal 367 and the lower negative electrode terminal 377 are not electrically connected to each other.

(A) of Fig. 14 is a side view showing shapes of the terminal parts 15, 45, and 75 on a side of the electric device main body, and (B) of Fig. 14 is a comparison table summarizing an arrangement situation of the power terminals (the positive electrode input terminal and the negative electrode input terminal) in the terminal parts 15, 45, and 75. (A) and (B) of Fig. 14 are schematic illustrations for explaining these relationships, and thus the shapes and dimensions are not exact. In realizing an electric device system in which a plurality (a plurality of types) of battery packs is each attached to any of a plurality of electric device main bodies and operated, the shapes of the terminal parts 45 and 75 are set on the basis of the shape of the terminal part 15 of 18 V (the low-voltage device main body 1). The external dimensions of the base portions 16, 46, and 76 of the terminal parts 15, 45, and 75 are substantially the same and compatible (however, the presence or absence of the protrusions 48 and 78 for preventing erroneous attachment is different).

Assuming that the height of the exposed portion of the positive electrode input terminal 22 in the terminal part 15 is H, the terminal part 45 for 36 V is divided into two parts of upper and lower portions, and two terminals (the positive electrode input terminal 52 and the terminal portion 59b of the short-circuiting bar 59) are disposed in the divided portions. In the terminal part 75 for 72 V, an upper half region is further divided into two parts, and two terminals (the positive electrode input terminal 82 and the terminal portion 89b of the short-circuiting bar 89) are disposed in a portion at a 1/4 height of H. Since the electrode portion serving as the base is divided and used in this way, the low/intermediate-voltage battery pack 201 can be configured to be attachable to both the low-voltage device main body 1 and the intermediate-voltage device main body 31, and the intermediate/high-voltage battery pack 301 can be configured to be attachable to both the intermediate-voltage device main body 31 and the high-voltage device main body 61. That is, by changing the internal terminal structure while maintaining the conventional (existing) shape of the slot into which the terminal of the battery pack is inserted, specifically, by arranging the positive electrode terminals 362 and 372 connected to the positive electrode of each cell unit in the same slot to be close to each other and by arranging the negative electrode terminals 367 and 377 connected to the negative electrode of each cell unit in the same slot to be close to each other, it is possible to provide an intermediate/high-voltage battery pack 301 that can be connected to both the intermediate-voltage device main body 31 and the high-voltage device main body 61. Moreover, in a case of the intermediate-voltage device main body 31, a battery pack of either the low/intermediate-voltage battery pack 201 or the intermediate/high-voltage battery pack 301 can be also attached thereto. In the present embodiment, the voltage switching type low/intermediate-voltage battery pack 201 and the voltage switching type intermediate/high-voltage battery pack 301 overlap each other in a range to cover (the device main body to which the battery pack can be attached) (both capable of 36 V output), and thus it is possible to realize an electric device system in which the high-voltage device main body 61 is easily employed, the middle/high-voltage battery pack 301 can be efficiently used between a plurality of voltages, and it is easy to use.

As shown in (B) of Fig. 14, the terminal part 15 for 18 V (for the low voltage) is divided and used as the terminal section 45 for 36 V, and one half (an upper half) of the terminal part 45 for 36 V is further divided and used as the terminal part 75 for 72 V On the basis of this concept, if the uppermost H/4 of the terminal part 75 for 72V is further divided into two parts, that is, is divided into two H/8, a switching type battery pack of 72 V and 144 V can also be theoretically realized. However, in practice, the vertical width of the terminal portion is small, and it is necessary to consider an adverse effect, and thus it is preferable to commercialize the battery pack and the electric device main body according to the concept of the electric device system of the present embodiment.

The electric device main body for 72 V (the high-voltage device main body 61) of (A) and (B) of Fig. 14 is configured such that the upper half of the terminal part 45 for 36 V in the height direction is divided in the vertical direction for use. However, as another proposal, the upper half of the terminal part 45 in the height direction can also be divided in the front-rear direction for use. A terminal part 475 of the electric device main body and an intermediate/high-voltage battery pack 501 realized on the basis of this concept will be described with reference to (A) of Fig. 15 to Fig. 19.

### Embodiment 2

(A) of Fig. 15 is a connection circuit diagram between an intermediate/high-voltage battery pack 501 and the intermediate-voltage device main body 31 according to a second embodiment of the present invention. The intermediate/high-voltage battery pack 501 has two positive electrode terminals (562, 572) and two negative electrode terminals (567, 577) connected to a first cell unit 545 and a second cell unit 546, but has a characteristic in that arm portions of the two terminals are aligned back and forth instead of up and down. That is, the positive electrode terminals are constituted by a rear positive electrode terminal 562 and a front positive electrode terminal 572, and the negative electrode terminals are constituted by a rear negative electrode terminal 567 and a front negative electrode terminal 577. On the other hand, the intermediate-voltage device main body 31 has the same shape as the terminal part 45 described with reference to (A) of Fig. 10. A positive electrode of the first cell unit 545 is connected to the front positive electrode terminal 572, and a negative electrode of the first cell unit 545 is connected to the rear negative electrode terminal 567. Further, a positive electrode of the second cell unit 546 is connected to the rear positive electrode terminal 562, and a negative electrode of the second cell unit 546 is connected to the front negative electrode terminal 577.

The front positive electrode terminal 572 has two left and right arm portions 572a and 572b, and the rear positive electrode terminal 562 has two left and right arms 562a and 562b. The front negative electrode terminal 577 has two left and right arm portions 577a and 577b, and the rear negative electrode terminal 567 has two left and right arms 567a and 567b. These terminals (562, 572, 567, 577) can be configured with a common component. If the terminal shape is described with the front positive electrode terminal 572 as an example, the front positive electrode terminal 572 is formed in substantially a U shape in which rear edges of a portion close to a circuit board 550 (see (A) and (B) of Fig. 16) are connected to each other in the left-right direction and a front side opens in a top view, and the arm portions 572a and 572b extending upward from both left and right sides of the substantially U-shaped portion are formed. Leg portions 572d and 572e are formed downward from the substantially U-shaped portion. The leg portions 572d and 572e pass through mounting holes in the circuit board 550 to a back side and are fixed to the back side of the circuit board 550 by soldering.

The arm portions 572a and 572b are configured such that an interval (a left-right direction interval) is wide near the circuit board and the interval narrows toward the upper side. A point of contact with the connection terminal on a side of the electric device main body (a portion with the narrowest interval between the left and right arm portions 572a and 572b) is set to be positioned at the same position as the positive electrode input terminal 52 positioned on the upper side of the terminal part 45 of the intermediate-voltage device main body 31. Further, the short-circuiting bar 59 of the intermediate-voltage device main body 31 is positioned between the left and right arm portions 572a and 572b, but is spaced apart from the left and right arm portions 572a and 572b, and is in a physically and electrically non-contact state. A contact state between the rear positive electrode terminal 562 and the positive electrode input terminal 52 is the same as the contact state between the front positive electrode terminal 572 and the positive electrode input terminal 52. Therefore, the front positive electrode terminal 572 and the rear positive electrode terminal 562 are short-circuited via the positive electrode input terminal 52. Similarly, the front negative electrode terminal 577 and the rear negative electrode terminal 567 are short-circuited via the negative electrode input terminal 57.

With the above configuration, when the intermediate/high-voltage battery pack 501 is attached to the intermediate-voltage device main body 31, the voltage of the first cell unit 545 and the second cell unit 546 connected in parallel, that is, a direct current of rated 36 V is output between the positive electrode input terminal 52 and the negative electrode input terminal 57 of the intermediate-voltage device main body 31.

(B) of Fig. 15 is a connection circuit diagram between the intermediate/high-voltage battery pack 501 and a high-voltage device main body 461. In the second embodiment, in a shape of the terminal part 475 of the high-voltage device main body 461, a positive electrode input terminal 482 and a terminal portion 489b of a short-circuiting bar 489 are disposed to be aligned in the front-rear direction, and a negative electrode input terminal 487 and a terminal portion 489c of the short-circuiting bar 489 are disposed to be aligned in the front-rear direction. The positive electrode input terminal 482 and the negative electrode input terminal 487 are disposed to penetrate a horizontal portion 476a (see (A) and (B) of Fig. 18, which will be described later) of a base portion 476 (see (A) and (B) of Fig. 18, which will be described later) of the terminal part 475 from an upper side to a lower side thereof. The short-circuiting bar 489 is disposed such that a connection portion 489a extends in a horizontal direction, and the short-circuiting bar 489 is cast in the horizontal portion 476a of the base portion 476 (see (A) and (B) of Fig. 18, which will be described later) of the terminal part 475. In this way, by the terminal part 475 of the high-voltage device main body 461 being matched with the shape of the power terminal group (562, 567, 572, 577) of the intermediate/high-voltage battery pack 501 of the second embodiment, the parallel connection voltage (36 V) and the series connection voltage (72) of the first cell unit 545 and the second cell unit 546 are output, and thus it is possible to realize an easy-to-use electric device system that realizes automatic switching between the intermediate voltage and the high voltage.

(A) and (B) of Fig. 16 are views for explaining a connection state between the terminal part 45 of the intermediate-voltage device main body 31 and a connection terminal group 560 of the intermediate/high-voltage battery pack 501 according to the second embodiment. The intermediate/high-voltage battery pack 501 includes the circuit board 550. As connection terminals on a side of the intermediate/high-voltage battery pack 501, rear positive electrode terminals 561 and 562, front positive electrode terminals 571 and 572, a T terminal 364, a V terminal 365, an LS terminal 366, a rear negative electrode terminal 567, a front negative electrode terminal 577, and an LD terminal 368 are fixed to the circuit board 550. A group of terminals for signal transmission, that is, the T terminal 364, the V terminal 365, the LS terminal 366, and the LD terminal 368 are the same components of the low/intermediate-voltage battery pack 201 shown in (A) of Fig. 7. In fixing these power terminals or these signal terminals, leg portions of each terminal passes through holes of the circuit board 550 and are soldered on a back side of the circuit board 550.

(B) of Fig. 16 is a perspective view showing a state in which the terminal part 45 and the connection terminal group 560 are fitted to each other. A connection state between the T terminal 364, the V terminal 365, the LS terminal 366, and the LD terminal 368 for a signal and the T terminal 54, the V terminal 55, the LS terminal 56, and the LD terminal 58 for a signal is the same as that of the low/intermediate-voltage battery pack 201 of the first embodiment. The rear positive electrode terminal 562 and the front positive electrode terminal 572 are fitted to the positive electrode input terminal 52 at the same time. Similarly, the rear negative electrode terminal 567 and the front negative electrode terminal 577 are fitted to the negative electrode input terminal 57 at the same time. The short-circuiting terminal portion 59b of the short-circuiting bar 59 is in a floating state in which it does not come into contact with either the rear positive electrode terminal 562 or the front positive electrode terminal 572. Although not visible in the figure, the short-circuiting terminal portion 59c of the short-circuiting bar 59 is also in a floating state in which it does not come into contact with either the rear negative electrode terminal 567 or the front negative electrode terminal 577 (a non-contact state or an insulated state). Accordingly, in the attached state of (B) of Fig. 16, the voltage of the first cell unit 545 and the second cell unit 546 connected in parallel, that is, a direct current of rated 36 V is output between the positive electrode input terminal 52 and the negative electrode input terminal 57. Also in the second embodiment, as in the first embodiment, instead of the low/intermediate-voltage battery pack 201, the intermediate/high-voltage battery pack 501 can be attached to the intermediate-voltage device main body 31. Although not shown in (B) of Fig. 16, a synthetic resin cover may be attached to a lower portion of the front positive electrode terminal 572 and a lower portion of the rear positive electrode terminal 562 such that the short-circuiting terminal portion 59b of the short-circuiting bar 59 does not come into contact with the positive electrode terminals 562 and 572. Similarly, lower halves of the front negative electrode terminal 577 and the rear negative electrode terminal 567 may be also provided with any insulating means such as a synthetic resin cover such that the short-circuiting bar 59 cannot be conducted to the front negative electrode terminal 577 and the rear negative electrode terminal 567.

(A) and (B) of Fig. 17 are views of the terminal part 45 of the intermediate-voltage device main body 31 and the connection terminal group 560 of the intermediate/high-voltage battery pack 501 according to the second embodiment, (A) of Fig. 17 is a perspective view, and (B) of Fig. 17 is a rear view from the rear. The short-circuiting terminal portion 59b of the short-circuiting bar 59 is accommodated (positioned) between the left and right arm portions 562a and 562b and between the left and right arm portions 572a and 572b of the positive electrode terminals 562 and 572 with a gap therebetween (not to come into contact them). Similarly, also on a side of the negative electrode terminal (567, 577), the short-circuiting terminal portion 59s of the short-circuiting bar 59 is accommodated (positioned) between the left and right arm portions 567a and 567b and between the left and right arm portions 577a and 577b of the negative electrode terminals 567 and 577 with a gap therebetween (not to come into contact them). Above the short-circuiting terminal portion 59b of the short-circuiting bar 59, the positive electrode input terminal 52 is in contact with the arm portions 562a and 562b and the arm portions 572a and 572b. These contacts short-circuit the positive electrode terminals of the first cell unit 545 and the second cell unit 546 (see (A) and (B) of Fig. 15 for both) to the positive electrode input terminal 52. Similarly, above the short-circuiting terminal portion 59c of the short-circuiting bar 59, the negative electrode input terminal 57 is in contact with the arm portions 567a and 567b and the arm portions 577a and 577b. These contacts short-circuit the negative electrode terminals of the first cell unit 545 and the second cell unit 546 (see (A) and (B) of Fig. 15 for both) to the negative electrode input terminal 57. Among the signal terminals, the T terminal 364, the V terminal 365, and the LS terminal 366 are formed lower than the other terminals in the vertical direction, and thus a space for the protrusion 48 to be positioned when the terminal part 45 is attached is secured.

In (B) of Fig. 17, the shapes of arm portions 561a, 561b, 562a, and 562b of the rear positive electrode terminals 561 and 562 can be understood. The arm portions 561a, 561b, 562a, and 562b are formed to extend upward from both left and right side surfaces of base portions 561c and 562c that are bent in a U shape when viewed from above. The gaps between the arm portions 561a, 561b, 562a, and 562b are narrowed upward from a connection portion of the base portions 561c and 562c, and the arm portions 561a, 561b, 562a, and 562b are bent to widen to the left and right near upper ends thereof. This bent portion becomes a contact point with the connection terminal on a side of the electric device main body.

(A) and (B) of Fig. 18 are perspective views showing a configuration of the terminal part 475 of the high-voltage device main body 461 and the connection terminal group 560 of the intermediate/high-voltage battery pack 501 according to the second embodiment, and (A) of Fig. 18 is a view showing a state immediately before the intermediate/high-voltage battery pack 501 is attached (a state before the terminal portion 475 is fitted). The positive electrode input terminal 482 and the terminal portion 489b of the short-circuiting bar 489 are disposed downward from an upper wall of the base portion 476 of the terminal part 475. In a side of the negative electrode terminal, the negative electrode input terminal 487 and the terminal portion 489c of the short-circuiting bar 489 (not visible in the figure) are disposed in the same way.

(B) of Fig. 18 is a view showing a fitting state between a terminal group of the terminal part 475 of the high-voltage device main body 461 and the connection terminal group 560 of the intermediate/high-voltage battery pack 501. The positive electrode input terminal 482 of the terminal part 475 is fitted to the rear positive electrode terminal 562, and the negative electrode input terminal 487 of the terminal part 475 is fitted to the rear negative electrode terminal 567. The terminal portion 489b of the short-circuiting bar 489 is fitted to the front positive electrode terminal 572, and the terminal portion 489c of the short-circuiting bar 489 is fitted to the front negative electrode terminal 577. In such a connection state, the voltage of the first cell unit 545 and the second cell unit 546 connected in series, that is, a direct current of rated 72 V is output between the positive electrode input terminal 482 and the negative electrode input terminal 487 of the high-voltage device main body 461.

Fig. 19 is a view (part 2) showing a state in which the terminal part 475 of the high-voltage device main body 461 and the connection terminal group 560 of the intermediate/high-voltage battery pack 501 according to the second embodiment are fitted to each other. A protrusion 478 for preventing erroneous attachment is formed on the terminal part 475. As described above, the terminal portions (the positive electrode terminals 562 and 572, and the negative electrode terminals 567 and 577) of the intermediate/high-voltage battery pack 501 are configured to extend upward from the circuit board 550. Therefore, in a case where the intermediate-voltage device main body 31 is connected to the intermediate/high-voltage battery pack 501, in order to make the terminal portions 59b and 59c of the short-circuiting bar 59 not come into contact with the positive electrode terminals 562 and 572 and the negative electrode terminals 567 and 577, the terminal portions are formed such that a left-right direction width between the pair of arm portions (for example, 562a and 562b), which is on a lower side (a side of the circuit board 550), of the terminal corresponding to the short-circuiting bar 59 is made larger than a thickness of each of the terminal portions 59b and 59c of the short-circuiting bar 59 to generate a gap between the terminal portions 59b and 59c and the arm portions. In addition, the left-right direction width between the pair of arm portions on a tip end side of the terminal portion is made smaller than the thickness of the terminal portion on a side of the electric device main body. With this configuration, in a case where the intermediate-voltage device main body 31 is connected to the intermediate/high-voltage battery pack 501, the positive electrode terminal and the negative electrode terminal of both are reliably fitted to each other, and the short-circuiting bar 59 is not fitted to any of the terminals of the intermediate/high-voltage battery pack 501. Therefore, the first cell unit 545 and the second cell unit 546 can be connected in parallel via the positive electrode terminals 562 and 567 and the negative electrode terminals 572 and 577. On the other hand, in a case where the high-voltage device main body 61 is connected to the intermediate/high-voltage battery pack 501, the positive electrode input terminal 482, the negative electrode input terminal 487, and the short-circuiting bar 489 of the high-voltage device main body 61 are reliably fitted to the rear positive electrode terminal 562, the rear negative electrode terminal 567, the front positive electrode terminal 572, and the front negative electrode terminal 577 of the intermediate/high-voltage battery pack 501. The positive electrode input terminal 482, the negative electrode input terminals 487 and 582, and the short-circuiting bar 489 of the high-voltage device main body 61 each extend downward from the base portion 476 of the terminal part 475, and thus they can be reliably fitted to the tip end sides of the arm portions without being affected by the gap between the arm portions of the terminal portions of the intermediate/high-voltage battery pack 501.

Fig. 20 is a schematic view showing shapes of the terminal parts 15, 45, and 475 of a side of the electric device main body and is a view for explaining their size relationships. The external dimensions of the base portion 476 of the terminal part 475 are a length L and a height H and are compatible (however, the presence or absence of the protrusions 48 and 478 for preventing erroneous attachment is different). Assuming that the height of the exposed portion of the positive electrode input terminal 22 in the terminal part 15 is H, the terminal part 45 for 36 V is divided into two parts of upper and lower portions, and two terminals (the positive electrode input terminal 52 and the terminal portion 59b of the short-circuiting bar 59) are disposed in the divided portions. In the terminal part 475 for 72 V, an upper half region is further divided into two parts in the front-rear direction, and two terminals (the positive electrode input terminal 482 and the terminal portion 489b of the short-circuiting bar 489) are disposed in a front 1/2 portion and a rear 1/2 portion. Since the electrode portion of the terminal part 45 for 36 V (the intermediate-voltage device main body 31) serving as the base is divided and used in this way, a battery pack of either the intermediate/high-voltage battery pack 301 or the intermediate/high-voltage battery pack 501 can be also attached thereto.

Also in the intermediate/high-voltage battery pack 501 of the second embodiment, as in the intermediate/high-voltage battery pack 301 of the first embodiment, the intermediate/high-voltage battery pack 501 is simply attached to either the intermediate-voltage device main body 31 or the high-voltage device main body 461, and thus it is possible to switch the voltage to an appropriate output voltage. Therefore, it is possible to provide an electric device system that promotes the spread of the high-voltage device main body in addition to the intermediate-voltage device main body.

### Embodiment 3

Fig. 21 is an overall view of an electric device system according to a third embodiment of the present invention. The low-voltage battery pack 101 can be attached to the low-voltage device main body 1 as indicated by a solid line arrow 91 (an o symbol in the figure), but cannot be attached to the intermediate-voltage device main body 31 and a high-voltage device main body 601 as indicated by dotted line arrows 96 and 98 (an x symbol in the figure). The low/intermediate-voltage battery pack 201 can be attached to the low-voltage device main body 1 and the intermediate-voltage device main body 31 as indicated by solid line arrows 92 and 93, but cannot be attached to the high-voltage device main body 601 as indicated by a dotted line arrow 97. The battery pack 701 is a three-voltage supportable battery pack (hereinafter referred to as a "three-voltage battery pack") and can be attached to any of the low-voltage device main body 1, the intermediate-voltage device main body 31, and the high-voltage device main body 601 as indicated by solid line arrows 792 to 794. The three-voltage battery pack 701 automatically selects and outputs the voltage corresponding to the attached electric device main body (1, 31, 601), that is, any of 18 V, 36 V, and 72 V. A high-voltage device main body 601 in the third embodiment differs from the high-voltage device main body 61 shown in Fig. 1 in a shape of a terminal part 615 (see (A) of Fig. 27 to (B) of Fig. 28, which will be described later). Fig. 21 shows only one kind of the three-voltage battery pack 701 as the battery pack. The intermediate/high-voltage battery pack 301 shown in (A) and (B) of Fig. 15 can be used in the low-voltage device main body 1 and the intermediate-voltage device main body 31, but cannot be attached to the high-voltage device main body 601 due to the difference in the shape of the connection terminal portion.

The appearance of the three-voltage battery pack 701 is similar to the intermediate/high-voltage battery pack 301 shown in Fig. 5, and particularly, the rail portions 238a and 238b (see Fig. 5), which are formed in the three-voltage battery pack 701, for attaching to the electric device main body (1, 31, 601), the size of the slot of the slot group arrangement region 220 (see Fig. 5), and the latch mechanism for maintaining or releasing the attachment state to the electric device main body (1, 31, 601) are compatible.

A total of 20 battery cells are accommodated in a case of the three-voltage battery pack 701. In a case where the type of the battery cell used is a lithium ion battery cell (rated 3.6 V), 20 battery cells must be connected in series to obtain a voltage of 72 V. In order to obtain a voltage of 36 V, ten battery cells are connected in series, and these two sets of series connections are further connected in parallel. Further, in order to obtain a voltage of 18 V, each five battery cells are connected in series, and all four sets of series connections are connected in parallel.

The three-voltage battery pack 701 can be charged using an external charger (not shown) after being removed from the electric device main body (1, 31, 601). Here, if a charger for 18 V is prepared, the three-voltage battery pack 701 can be charged. Further, the three-voltage battery pack 701 can be charged even with a charger for 36 V or a charger for 72 V. In the electric device system shown in Fig. 21, a combination of a low voltage, an intermediate voltage, and high voltage is configured as 18 V, 36 V, and 72 V, but the present invention is not limited to the combination of these voltages, and the low voltage may be n volt (where n > 0) other than 18V, the intermediate voltage may be twice the low voltage (2n volt), and the high voltage may be four times the low voltage (4n volt).

(A) to (C) of Fig. 22 are views showing a connection terminal group of the three-voltage battery pack 701 of Fig. 21, (A) of Fig. 22 is a perspective view of all of a circuit board 730 and a connection terminal group 740, (B) of Fig. 22 is a perspective view of a large-sized terminal component 721, and (C) of Fig. 22 is a perspective view of a small-sized terminal component 726. In the three-voltage battery pack 701, five lithium ion battery cells is set as one cell unit, and the output of each cell unit is connected to four positive electrode terminals 745 to 748 and four negative electrode terminals 761 to 764 (details will be described with reference to (A) and (B) of Fig. 23). 741 to 744 (741, 742, 743, and 744 are disposed in this order from the front; 745 to 748 and 761 to 764 are the same) are positive electrode terminals (C+ terminals) for charging, and the positive electrode terminal 741 is connected to the positive electrode terminal 745 via a fuse (not shown), and similarly, the positive electrode terminals 742 to 744 are connected to the positive electrode terminals 746 to 748 via fuses (not shown), respectively.

A positive electrode terminal set (741 to 748) and a negative electrode terminal set (761 to 764) are obtained by doubling the number of terminals in a positive electrode terminal set and a negative electrode terminal set of the second embodiment shown in (A) of Fig. 15 to (B) of Fig. 17. As a component (a connection terminal piece) used for the positive electrode terminal set (741 to 748) and the negative electrode terminal set (761 to 764), two types of components, that is, the large-sized terminal component 721 shown in (B) of Fig. 22 and the small-sized terminal component 726 shown in (C) of Fig. 22 are prepared. Then, as shown in (A) of Fig. 22, when the small-sized terminal component 726, the large-sized terminal component 721, the small-sized terminal component 726, and the large-sized terminal component 721 are alternately disposed from the front to the rear of the circuit board 730, the positive electrode terminal set (741 to 744) for charging, the positive electrode terminal set (745 to 748) for discharging, and the negative electrode terminal set (761 to 764) are formed. In this way, the positive and negative terminal group is divided into four, and each terminal is connected to the positive electrode or the negative electrode of the cell unit of 18 V.

An upper case (not shown) covering an upper side of the circuit board 730 in (A) to (C) of Fig. 22 has a shape compatible with the upper case 310 of the battery pack 301 shown in Fig. 5. In the upper case of the circuit board 730, an interval between eight slots aligned in the left-right direction and a shape of the slot are the same those of the upper case 310 of the battery pack 301. The positive electrode terminal set (741 to 744) for charging is disposed inside a slot (not shown) having the same shape as the slot 221 shown in Fig. 5. Further, the positive electrode terminal set (745 to 748) for discharging is disposed inside a slot (not shown) having the same shape as the slot 222 shown in Fig. 5. Further, the negative electrode terminal set (761 to 764) is disposed inside a slot (not shown) having the same shape as the slot 227 shown in Fig. 5. The slots 222 and 227 shown in Fig. 5 may be provided with a dividing wall to divide the slots 222 and 227 into two in the vertical direction. In a case where the battery pack 301 and the intermediate-voltage device main body 31 are connected to each other, as shown in (A) of Fig. 9, the positive electrode input terminal 52 and the negative electrode input terminal 57 serving as power supply terminals are inserted into an upper step side (a first slot) of the slot, and the terminal portions 59b and 59c of the short-circuiting bar 59 are inserted into a lower side (a second slot) of the slot. On the other hand, in a case where the battery pack 301 and the high-voltage device main body 61 are connected to each other, as shown in (B) of Fig. 9, the positive electrode input terminal 81 and the negative electrode input terminal 87 serving as power supply terminals and the terminal portions 89b and 89c of the short-circuiting bar 89 are inserted into an upper step side of the slot, and any of the terminals of the high-voltage device main body 61 is not inserted into a lower side of the slot. In this way, when the battery pack 301 is provided with the dividing wall that divides the slot into which the power supply terminals are inserted, it is possible to curb accidental contact between the terminals disposed inside the slot. The dividing wall may be integrated with or separate from the housing of battery pack 301.

Three signal terminals (754 to 756) are provided between the positive electrode terminal group (745 to 748) and the negative electrode terminal group (761 to 764) of the circuit board 730. Further, one signal terminal (758) is provided on a left side of the negative electrode terminal group (761 to 764). The three signal terminals are a T terminal 754, a V terminal 755, and an LS terminal 756, which have the same shapes and functions as the T terminal 264, the V terminal 265, and the LS terminal 266 shown in (A) of Fig. 7 to (B) of Fig. 8. Further, the signal terminal on the left side of the negative electrode terminal group (761 to 764) is an LD terminal 758, which has the same shape and function as the LD terminal 268 shown in (A) of Fig. 7 to (B) of Fig. 8.

(B) of Fig. 22 is a view showing the large-sized terminal component 721. The large-sized terminal component 721 is a component used as the positive electrode terminals 742, 744, 746, and 748 and the negative electrode terminals 762 and 764 shown in (A) and (B) of Fig. 23. The large-sized terminal component 721 is an integral part of a metal and is manufactured here by pressing a metal plate. The large-sized terminal component 721 has three main parts, that is, arm portions 721a and 721b, a base portion 721c, and leg portions 721d and 721e. The shape of the arm portions 721a and 721b is important for the connection terminal piece. At a connection portion with the base portion 721c, an interval is d2, but an interval between the left and right arm portions 721a and 721b in the left-right direction narrows toward the upper side, and thus the left and right arm portions 721a and 721b approach each other such that the interval becomes d4 at the closest point (here, d4 < d2). Further, after passing the closest point, the interval between the left and right arm portions 721a and 721b widens to be d5 toward the upper side (d4 < d5 < d2). An interval d1 between the leg portions 721d and 721e is the same as the interval d2 at the connection portion between the base portion 721c and the arm portions.

The base portion 721c is a portion that connects lower extending portions of the left and right arm portions 721a and 721b formed in an angled column shape to each other and is formed in a solid shape having a predetermined plate thickness. Two leg portions 721d and 721e extend below the base portion 721c. The leg portions 721d and 721e are formed to fix the large-sized terminal component 721 to the circuit board 730. For this, the leg portions 721d and 721e pass through holes (not visible in the figure) formed in the circuit board 730 to the lower side and are soldered to a circuit pattern on the lower side of the circuit board 730. The leg portions 721d and 721e are formed to have a thickness in the front-rear direction which is not equal to that of the arm portions 721a and 721b, but is less than that. A bottom surface of the base portion 721c is formed flat such that the bottom surface is in excellent contact with the circuit board 730 and is stable.

(C) of Fig. 22 is a view showing the small-sized terminal component 726. The small-sized terminal component 726 is a component used as the positive electrode terminals 741, 743, 745, and 747 and the negative electrode terminals 761 and 763 shown in (A) of Fig. 22. The small-sized terminal component 726 is an integral part manufactured by press working of a metal similarly to the large-sized terminal component 721. The small-sized terminal component 726 has three main parts, that is, arm portions 726a and 726b, a base portion 726c, and leg portions 726d and 726e. At a connection portion with the base portion 726c, an interval in the small-sized terminal component 726 in the left-right direction is d7, but an interval between the left and right arm portions 726a and 726b in the left-right direction narrows toward the upper side, and thus the left and right arm portions 726a and 726b approach each other such that the interval becomes d8 at the closest point (here, d8 < d7). Further, after passing the closest point, the interval between the left and right arm portions 726a and 726b widens to be d9 toward the upper side (d8 < d7 < d9). An interval d6 between the leg portions 726d and 726e is the same as the interval d7 at the connection portion between the base portion 721c and the arm portions.

Two leg portions 726d and 726e extend below the base portion 726c. The leg portions 726d and 726e are formed to fix the small-sized terminal component 726 to the circuit board 730. For this, the leg portions 726d and 726e pass through holes (not visible in the figure) formed in the circuit board 730 to the lower side and are soldered to a circuit pattern on the lower side of the circuit board 730. The leg portions 726d and 726e are formed to have a thickness in the front-rear direction which is the equal to that of the arm portions 721a and 721b.

A height h1 of a fitting portion of the arm portions 726a and 726b of the small-sized terminal component 726 from an upper end of the base portion 726c is almost equal to a vertical center position of a first short-circuiting bar 631 (see (A) and (B) of Fig. 25) which will be described later and a position near a lower end of a terminal portion of a third short-circuiting bar 633 which will be described later (see (A) and (B) of Fig. 25). On the other hand, in the large-sized terminal component 721, at a portion of a height h1 from an upper end of the base portion 721c, an interval d3 between the arm portions 721a and 721b is a sufficient magnitude as compared with a left-right direction width of each of first to third short-circuiting bars 631 to 633 (see (A) and (B) of Fig. 23, which will be described later), a positive electrode input terminal 622, or a negative electrode input terminal 627 (for example, the interval d3 is more than twice the left-right direction width). A height h2 of a fitting portion of the arm portions 721a and 721b of the large-sized terminal component 721 from an upper end of the base portion 721c is greater than the height h1 of the small-sized terminal component 726 (for example, the height h₂ is more than twice the height hi).

(A) of Fig. 23 is a connection circuit diagram between the three-voltage battery pack 701 and the low-voltage device main body 1. The three-voltage battery pack 701 has four sets of cell units 771 to 774. As in the first and second embodiments, each of the cell unit 771 to 774 has five battery cells connected in series, and thus each cell unit has an output of 18 V. In the figure, a voltage (unit volt, 18 V) shown at an uppermost end and a lowermost end of each cell unit (five battery cells) is a potential relative to a ground (0 V). Also, the voltages shown near the connection terminals (22, 27) are potentials relative to the ground (0 V). A positive electrode of a first cell unit 771 is connected to the positive electrode terminal 745 and a negative electrode thereof is connected to the negative electrode terminal 764. Similarly, a positive electrode of a second cell unit 772 is connected to the positive electrode terminal 746 and a negative electrode thereof is connected to the negative electrode terminal 761, a positive electrode of a third cell unit 773 is connected to the positive electrode terminal 747 and a negative electrode thereof is connected to the negative electrode terminal 762, and a positive electrode of a fourth cell unit 774 is connected to the positive electrode terminal 748 and a negative electrode thereof is connected to the negative electrode terminal 763.

The positive electrode input terminal 22 and the negative electrode input terminal 27 are terminals for receiving 18 V used in the low-voltage device main body 1 described with reference to (A) and (B) of Fig. 7. The positive electrode input terminal 22 comes into contact with all four positive electrode terminals 745 to 748, and the negative electrode input terminal 27 comes into contact with all four negative electrode terminals 761 to 764. Here, as can be seen from a contact portion of the positive electrode input terminal 22 (corresponding to the fitting portion in (B) and (C) of Fig. 22), the positive electrode terminals 745 and 747 come into contact with a lower half region of the positive electrode input terminal 22, and the positive electrode terminals 746 and 748 come into contact with an upper half region of the positive electrode input terminal 22. Similarly, the negative electrode terminals 761 and 763 come into contact with a lower half region of the negative electrode input terminal 27, and the negative electrode terminals 762 and 764 come into contact with an upper half region of the negative electrode input terminal 27. In the above connection state, 18 V of the four cell units 771 to 774 connected in parallel is output from the three-voltage battery pack 701 to the electric device main body 1.

(B) of Fig. 23 is a connection circuit diagram between the three-voltage battery pack 701 and the intermediate-voltage device main body 31. Connections between the cell units 771 to 774 and the positive electrode terminals 745 to 748 and the negative electrode terminals 761 to 744 are the same as those in (A) of Fig. 23. In (B) of Fig. 23, the intermediate-voltage device main body 31 for 36 V shown in (A) and (B) of Fig. 8 is connected thereto. Here, the positive electrode terminals 746 and 748 using the large-sized terminal component 721 come into contact with the positive electrode input terminal 52, and the positive electrode terminals 745 and 747 using the small-sized terminal component 726 come into contact with the terminal portion 59b of the short-circuiting bar 59. Similarly, the negative electrode terminals 762 and 764 using the large-sized terminal component 721 come into contact with the negative electrode input terminal 57, and the negative electrode terminals 761 and 763 using the small-sized terminal component 726 come into contact with the terminal portion 59c of the short-circuiting bar 59. From the above connection results, the cell units 771 and 773 are connected in parallel to form a low potential side (between 0 V and 18 V), the cell units 772 and 774 are connected in parallel to form a high potential side (between 18 V and 36 V), and the cell units 771 and 773 on the low potential side and the cell units 772 and 774 on the high voltage side are connected in series, and thus a direct current of a rated voltage of 36 V is output between the positive electrode input terminal 52 and the negative electrode input terminal 57. In this connection example, the positive electrode input terminal 52 and the negative electrode input terminal 57 correspond to the "intermediate voltage parallel terminal," and the short-circuiting bar 59 corresponds to the "intermediate voltage series terminal".

(A) of Fig. 24 is a connection circuit diagram between the three-voltage battery pack 701 and the high-voltage device main body 601 according to the third embodiment of the present invention, and (B) of Fig. 24 is a perspective view showing a state in which the terminal part 615 of the high-voltage device main body 601 in Fig. 21 and a power terminal portion of the connection terminal group 740 are fitted to each other. In addition to the positive electrode input terminal 622 and the negative electrode input terminal 627, three short-circuiting bars 631, 632, and 633 are provided in the terminal part 615 of the high-voltage device main body 601. The short-circuiting bars 631, 632, and 633 each have the same function as the short-circuiting bar 59 shown in the intermediate-voltage device main body 31 for 36 V shown in (A) and (B) of Fig. 8, and thus they function to short-circuit the positive electrode terminals 745 to 747 and the negative electrode terminals 761 to 763. The first short-circuiting bar 631 short-circuits the positive electrode terminal 745 and the negative electrode terminal 761, the second short-circuiting bar 632 short-circuits the positive electrode terminal 746 and the negative electrode terminal 762, and the third short-circuiting bar 633 short-circuits the positive electrode terminal 747 and the negative electrode terminal 763. As a result of such a connection, a circuit in which all the first cell unit 771 to the fourth cell unit 774 are connected in series is formed, and a direct current of 72 V is output between the positive electrode input terminal 622 and the negative electrode input terminal 627.

(B) of Fig. 24 is a partially enlarged view of (A) of Fig. 24, and the positive electrode input terminal 622 is constituted by a terminal portion 622a, a cast portion 622b, and a connection portion 622c. The cast portion 622b is formed between the terminal portion 622a and the connection portion 622c and serves as a portion of the terminal 615, which is cast into a resin. Similarly, the negative electrode input terminal 627c is also constituted by a terminal portion 627a, a cast portion 627b (see (A) and (B) of Fig. 28, which will be described later for a reference sign), and a connection portion 627c. In the first short-circuiting bar 631, as in the short-circuiting bar 59 for 36 V shown in (A) and (B) of Fig. 8, a shape when viewed from above is a U shape, and portions that come into contact with the positive electrode terminal 745 and the negative electrode terminal 761 (terminal portions 631b and 631c shown in (A) and (B) of Fig. 26, which will be described later) extend from the front to the rear in the horizontal direction. Also in the second short-circuiting bar 632, as in the first short-circuiting bar 631, a shape when viewed from above is a U shape, and portions that come into contact with the positive electrode terminal 746 and the negative electrode terminal 762 (terminal portions 632b and 632c shown in (A) and (B) of Fig. 26, which will be described later) are formed to extend from the front to the rear in the horizontal direction. A horizontal portion 631a of the first short-circuiting bar 631 and a horizontal portion 632a of the second short-circuiting bar 632 are both disposed to extend in the left-right direction and are disposed to be separate from each other by a predetermined distance in the vertical direction and the front-rear direction.

In the third short-circuiting bar 633, unlike the first and second short-circuiting bars 631 and 632 and as in the short-circuiting bar 489 for 72 V shown in (A) and (B) of Fig. 18, a shape when viewed from the front is a U shape. The third short-circuiting bar 633 comes into contact with the positive electrode terminal 747 and the negative electrode terminal 763. A horizontal portion 633a of the third short-circuiting bar 633 is disposed to extend in the left-right direction. In the positive electrode input terminal 622, the connection portion 622c having a through hole is formed near an upper end of the positive electrode input terminal 622, the terminal portion 622a to be fitted to arm portions 748a and 748b (see (A) and (B) of Fig. 26, which will described later for reference signs) of the positive electrode terminal 748 is formed near a lower end of the positive electrode input terminal 622, and a portion between the connection portion 622c and the terminal portion 622a becomes the cast portion 622b that is cast in the resin portion of the terminal part 615 (see (A) and (B) of Fig. 28, which will be described later). The negative electrode input terminal 627 also has the same shape as the positive electrode input terminal 622, and the connection portion 627c having a through hole is formed near an upper end thereof.

As described above, by realizing the terminal shapes shown in (A) of Fig. 23 to (B) of Fig. 24, in the three-voltage battery pack 701, it is possible to realize a battery pack capable of outputting three voltages of 18 V, 36 V, and 72 V. In particular, the three-voltage battery pack 701 can deal not only with the new high-voltage device main body 601 that deals with 72 V, but also with the electric device main body 1 for 18 V and the electric device main body 31 for 36 V and thus has an advantage to deal with all electric device main bodies (1, 31, 601) just by purchasing the three-voltage battery pack 701 depending on the user. In addition, since the three-voltage battery pack 701 can also be charged using a charger for 18 V, there is no need to prepare an exclusive charger for 72 V, which is very convenient.

(A) of Fig. 25 is a side view showing a state before the terminal part 615 of the high-voltage device main body 601 of Fig. 21 and the power terminal portions (745 to 745) of the three-voltage battery pack 701 are fitted to each other. Here, portions provided in the terminal part 615 (see (A) and (B) of Fig. 28, which will be described later) on a side of the high-voltage device main body 601 are hatched such that they can be easily distinguished from portions provided on a side of the three-voltage battery pack 701. In order to attach the three-voltage battery pack 701 to the high-voltage device main body 601, the high-voltage device main body 601 is relatively moved from the front to the rear (it is the same even if a side of the three-voltage battery pack 701 is moved to a side of the high-voltage device main body 601). Here, as shown in (A) of Fig. 25, the terminal part 615 is moved in a direction of an arrow 635, the terminal portion 622a of the positive electrode input terminal 622 is fitted to the positive electrode terminal 748, the terminal portion 633b of the third short-circuiting bar 633 is fitted to the positive electrode terminal 747, the terminal portion 632b of the second short-circuiting bar 632 is fitted to the positive electrode terminal 746, and the terminal portion 631b of the first short-circuiting bar 631 is fitted to the positive electrode terminal 745.

(B) of Fig. 25 is a side view showing a state after the terminal part 615 and the power terminal portions (745 to 745) of the three-voltage battery pack 701 are fitted to each other from the state of (A) of Fig. 25. Here, the widths of the positive electrode terminals 745 to 748 in the front-rear direction and the intervals therebetween are shown numerically (unit: mm) on the upper side. As can be understood from (A) and (B) of Fig. 25, the small-sized terminal component 726 shown in (C) of Fig. 22 is used as the positive electrode terminals 745 and 747, and the large-sized terminal component 721 shown in (B) of Fig. 22 is provided as the positive electrode terminals 746 and 748. A length of each of the positive electrode terminals 745 to 748 in the front-rear direction is 1.2 mm, and the positive electrode terminals 745 to 748 are disposed at a regular interval (an interval of 1.3 mm) not to come into contact with each other. In other words, the interval between the positive electrode terminals 745 to 748 is made larger than the length of each of the arm portions of the positive electrode terminals 745 to 748 in the front-rear direction (a thickness of the arm portion).

A length of the terminal portion 622a of the positive electrode input terminal 622 in the front-rear direction is 0.9 mm, which is slightly smaller than the length of the positive electrode terminal 748 in the front-rear direction of 1.2 mm. On the other hand, a front-rear thickness of the third short-circuiting bar 633 is 1.2 mm, which is the same as a front-rear thickness of the arm portion of the positive electrode terminal 747. When the high-voltage device main body 601 is relatively moved from the front to the rear of the battery pack 701, the positive electrode input terminal 622 and the short-circuiting bars 631 to 633 on a hatched side approach the positive electrode terminals 745 to 748 as shown by an arrow 635 in (A) of Fig. 25. During this movement, the rail portions of the battery pack 701 and the rail portions of the electric device main body 601 are engaged with each other, and thus the terminal part 615 is linearly moved in a direction of the arrow 635. Due to this movement, during the attachment of the three-voltage battery pack 701, the positive electrode input terminal 622 moves with respect to an upper side of the positive electrode terminal 745 in the direction of the arrow 635 in a non-contact manner, temporarily engages with the arm portion of the positive electrode terminal 746 and then moves further, moves with respect to an upper side of the positive electrode terminal 747 in the direction of the arrow 635 without coming into contact therewith, and fits to the arm portions 748a and 748b (see (B) of Fig. 26 for reference signs) of the positive electrode terminal 748 at the last position (an attachment position) of a required movement amount in the attachment direction 635.

During the movement in the arrow 635, the third short-circuiting bar 633 temporarily engages with the arm portions 745a and 745b of the positive electrode terminal 745 and then moves further, temporarily engages with the arm portions 746a and 746b of the positive electrode terminal 746 and then moves further, and fits to the arm portions 747a and 747b (see (B) of Fig. 26 for reference signs) of the positive electrode terminal 747 at the last position of a required movement amount in the attachment direction 635. During the movement in the arrow 635, the second short-circuiting bar 632 moves with respect to the upper side of the positive electrode terminal 745 in the direction of the arrow 635 without coming into contact therewith and fits to the arm portions 746a and 746b (see (B) of Fig. 26 for reference signs) of the positive electrode terminal 746 at the attachment position. During the movement in the arrow 635, the first short-circuiting bar 631 simply fits to the arm portions 745a and 745b (see (B) of Fig. 26 for reference signs) of the positive electrode terminal 745 at the attachment position and is not related to the positive electrode terminals 746 to 748. Although the four positive electrode terminals 745 to 758 are illustrated in (A) and (B) of Fig. 25, the negative electrode terminals 761 to 764 have the same shapes and the same fitting state to the short-circuiting bars 631 to 633 as the four positive electrode terminals 745 to 758.

As described above, during the attachment of the three-voltage battery pack 701, the positive electrode input terminal 622 on a side of the electric device main body 1 interferes with the positive electrode terminal 746 in addition to the positive electrode terminal 748 which is a fitting target. Further, the third short-circuiting bar 633 interferes with the positive electrode terminals 745 and 746 in addition to the positive electrode terminal 747 which is a fitting target. The second short-circuiting bar 633 is fitted only to the positive electrode terminal 746 which is a fitting target and does not interfere with the other positive electrode terminals 745, 747 and 748. The first short-circuiting bar 631 is fitted only to the positive electrode terminal 745 which is a fitting target and does not interfere with the other positive electrode terminals 746 to 748.

(A) of Fig. 26 is a front view of (B) of Fig. 24. From (A) of Fig. 26, it is possible to understand the size of the positive electrode terminal 745 and the negative electrode terminal 761 using the small-sized terminal component 726 and the size of the positive electrode terminal 746 and the negative electrode terminal 762 using the large-sized terminal component 721. A inner width between the positive electrode terminal group (745 to 748) and the negative electrode terminal group (761 to 764) in the left-right direction is 30 mm, and this interval is the same as the interval between the positive electrode input terminal and the negative electrode input terminal of the battery pack 101 for 18 V of the related art (see Fig. 3) or the battery pack 201 for 36 V of the related art (see Fig. 3). The first short-circuiting bar 631 includes the horizontal portion 631a which extends in the left-right direction, and the terminal portion 631b to be fitted to the positive electrode terminal 745 and the terminal portion 631c to be fitted to the negative electrode terminal 761, which extend rearward from both ends of the horizontal portion 631a. The terminal portion 631b is disposed such that a position in the height direction includes the closest portion (the fitting portion shown in (C) of Fig. 22) between the arm portions 745a and 745b of the positive electrode terminal 745. Similarly, the terminal portion 631c is disposed such that a position in the height direction includes the closest portion (the fitting portion shown in (C) of Fig. 22) between the arm portions 761a and 761b of the negative electrode terminal 761.

The second short-circuiting bar 632 includes the horizontal portion 632a which extends in the left-right direction, and the terminal portion 632b to be fitted to the positive electrode terminal 746 and the terminal portion 632c to be fitted with the negative electrode terminal 762, which extend rearward from both ends of the horizontal portion 632a. The terminal portion 632b is disposed such that a position in the height direction includes the closest portion (the fitting portion shown in (B) of Fig. 22 between the arm portions 746a and 746b of the positive electrode terminal 746. Similarly, the terminal portion 632c is disposed such that a position in the height direction includes the closest portion (the fitting portion shown in (B) of Fig. 22) between the arm portions 762a and 762b of the negative electrode terminal 762.

An interval between the first short-circuiting bar 631 and the second short-circuiting bar 632 in the vertical direction is 3.7 mm. As can be seen in this figure, a position of the second short-circuiting bar 632 in the vertical direction is above the positive electrode terminals 745 and 747 (see (A) and (B) of Fig. 25) and the negative electrode terminals 761 and 763, and thus there is no concern that the second bar 632 interferes with the positive electrode terminals 745 and 747 and the negative electrode terminals 761 and 763. On the other hand, the first short-circuiting bar 631 has a height that allows for the first short-circuiting bar 631 to interfere with the positive electrode terminals 746 to 748 and the negative electrode terminals 762 to 764, but as shown in (B) of Fig. 25, during the attachment, the second short-circuiting bar 632 is separated from the positive electrode terminal 746 and the negative electrode terminal 762 in the front-rear direction, there is no concern of interference.

The third short-circuiting bar 633 includes the horizontal portion 633a which extends in the left-right direction, and the terminal portion 633b to be fitted to the positive electrode terminal 747 (see (A) and (B) of Fig. 25) and the terminal portion 633c to be fitted to the negative electrode terminal 763 (see (A) and (B) of Fig. 25), which extend downward from both ends of the horizontal portion 633a. The horizontal portion 633a of the third short-circuiting bar 633 is positioned above and apart from the positive electrode terminals 746 and 748 and the negative electrode terminals 762 and 764 using the large-sized terminal component 721. As a result, the horizontal portion 633a of the third short-circuiting bar 633 can be easily cast in the resin portion of the terminal part 615. An interval between the second short-circuiting bar 632 and the third short-circuiting bar 633 in the vertical direction is 3.4 mm. A lower end of the terminal portion 633b extends slightly below the closest portion (the fitting portion) between the arm portions 747a and 747b of the positive electrode terminal 747. Similarly, a lower end of the terminal portion 633c extends slightly below the closest portion (the fitting portion) between the arm portions 763a and 763b of the negative electrode terminal 763.

(B) of Fig. 26 is a top view of (B) of Fig. 24. The positive electrode terminals 745 to 748 are disposed at a regular interval in the front-rear direction, and the arm portions (for example, 748a and 748b) thereof are disposed to be separate from each other in the left-right direction. As a result of this arrangement, contact surfaces between the arm portions of the positive electrode terminals 745 to 748 and the terminal group have a positional relationship perpendicular to the attachment direction. Similarly, the negative electrode terminals 761 to 764 are disposed at a regular interval in the front-rear direction, and the arm portions (for example, 764a and 764b) thereof are disposed to be separate from each other in the left-right direction. Contact surfaces between the arm portions of the negative electrode terminals 761 to 764 and the terminal group are disposed perpendicular to the attachment direction. An interval between the first short-circuiting bar 631 and the second short-circuiting bar 632 in the front-rear direction is 1.5 mm. An interval between the second short-circuiting bar 632 and the third short-circuiting bar 633 in the front-rear direction is 3.4 mm. By shifting the horizontal portion 631a of the first short-circuiting bar 631 forward from the front and rear positions of the positive electrode terminal 745 and the negative electrode terminal 761 in this way, it is possible to cast the horizontal portion 631a of the short-circuiting bar 631 in the resin portion of the terminal part 615. Similarly, by shifting the horizontal portion 632a of the first short-circuiting bar 632 forward from the positions of the positive electrode terminal 746 and the negative electrode terminal 762, it is possible to cast the horizontal portion 632a of the second short-circuiting bar 632 in the resin portion of the terminal part 615 while the second short-circuiting bar 632 does not interfere with the first short-circuiting bar 631.

(A) of Fig. 27 is a perspective view of the terminal part 615 of the high-voltage device main body 601 in Fig. 21 from the rear, and (B) of Fig. 27 is a perspective view of the connection terminal group cast in the resin portion in (A) of Fig. 27. The terminal part 615 is fixed to the synthetic resin by casting a plurality of connection terminal pieces in the synthetic resin, and thus terminal part 615 is formed including a solid base portion 615a in a substantially rectangular parallelepiped shape and an upper wall portion 615b formed in a wall shape by extending an upper portion of the base portion 615a toward the front. The positive electrode input terminal 622 and the negative electrode input terminal 627 are cast in the upper wall portion 615b, and the connection portions 622c and 627c thereof are exposed above the upper wall portion 615b. Similarly, a T-terminal 624, a V-terminal 625, an LS-terminal 626, and an LD terminal 628 are cast in the upper wall portion 615b and the base portion 615a, and connection portions 624c, 625c, 626c, and 628c are exposed above the upper wall portion 615b.

The horizontal portion 633a of the third short-circuiting bar 633 is cast in the upper wall portion 615b having a predetermined thickness. From a lower surface of the upper wall portion 615b, the terminal portion 622a of the positive electrode input terminal 622, the terminal portion 627a (see (A) and (B) of Fig. 28, which will be described later) of the negative electrode input terminal 627, and the terminal portions 633b and 633c (see (A) and (B) of Fig. 28, which will be described later) of the third short-circuiting bar 633 are exposed to extend downward. On a front side of the base portion 615a, the terminal portions 631b and 631c (see (A) and (B) of Fig. 28, which will be described later) of the first short-circuiting bar 633 are exposed to extend in the horizontal direction, and the terminal portions 632b and 632c (see (A) and (B) of Fig. 28, which will be described later) of the second short-circuiting bar 632 are exposed to extend in the horizontal direction.

(B) of Fig. 27 is a perspective view of the connection terminal group cast in the resin portion in (A) of Fig. 27. In each of the four signal terminals (the T terminal 624, the V terminal 625, the LS terminal 626, and the LD terminal 628), cast portions 624b to 626b and 628b are cast in the upper wall portion 615c such that the connection portions 624c to 626c and 628c are exposed from the upper wall portion 615b, and a rear half of the terminal portion is cast in the base portion 615a. Further, cut-out portions (624d, 628d, and the like) curved not to interfere with the horizontal portion 632a of the second short-circuiting bar 632 are formed in the front sides of the T terminal 624, the V terminal 625, the LS terminal 626, and the LD terminal 628. As compared with the terminal part 45 for the intermediate-voltage device main body 31 shown in (A) and (B) of Fig. 16, the size of each of the exposed portions of the T terminal 624, the V terminal 625, the LS terminal 626, and the LD terminal 628 in the vertical direction is about half. However, fitting positions of the T terminal 364, the V terminal 365, the LS terminal 366, and the LD terminal 368 on a side of the intermediate/high-voltage battery pack 501 in (B) of Fig. 16 with the corresponding terminals on a side of the battery pack (101, 201, 701) are near the lower side, and thus even a terminal shape as shown in (B) of Fig. 27 can be well fitted thereto. Since the cast portions of the T terminal 624, the V terminal 625, the LS terminal 626, and the LD terminal 628 and the horizontal portion 632a of the second short-circuiting bar 632 are cast in the synthetic resin, these terminals and the second short-circuiting bar 632 do not come into contact with each other.

(A) of Fig. 28 is a perspective view of the terminal part 615 of the high-voltage device main body 601 in Fig. 21 from the front. As compared with the size and shape of the positive electrode input terminal 52 and the negative electrode input terminal 57 of the intermediate-voltage device main body 31 shown in (A) and (B) of Fig. 18, each of the positive electrode input terminal 622 and the negative electrode input terminal 627 has a thin rod shape extending downward from the upper wall portion 615b and is an elongated connection terminal having an angled column shape. The terminal portions 633b and 633c of the third short-circuiting bar 633 are disposed behind the positive electrode input terminal 622 and the negative electrode input terminal 627, and these terminal portions 633b and 633c are disposed parallel to the positive electrode input terminal 622 and the negative electrode input terminal 627 and extend downward from the upper wall portion 615b.

The terminal portions 632b and 632c of the second short-circuiting bar 632 are exposed above and behind the terminal portions 633b and 633c of the third short-circuiting bar 633, and the terminal portions 631b and 631c of the first short-circuiting bar 631 are exposed below and behind the terminal portions 633b and 633c of the third short-circuiting bar 633. A periphery of a base of each of the terminal portion 632b and the terminal portion 631b is insulated by being covered with a resin cover 616b integrally formed with the base portion 615a, and a periphery of a base of each of the terminal portion 632c and the terminal portion 631c is insulated by being covered with a resin cover 616e integrally formed with the base portion 615a. In addition, the horizontal portion 631a of the first short-circuiting bar 631 is entirely covered with a resin cover 616c extending in the left-right direction, and the horizontal portion 632a of the second short-circuiting bar 632 is entirely covered with a resin cover 616d extending in the left-right direction.

In each of the T terminal 624, the V terminal 625, the LS terminal 626, and the LD terminal 628, which are terminals for signal transmission, as shown in (B) of Fig. 27, the rear end (the cast portion) of the terminal portion is cast in the base portion 615a to be fixed thereto. Here, unlike the terminal group shown in each of (A) of Fig. 7 to (B) of Fig. 8, the upper portion of each of the T terminal 624, the V terminal 625, the LS terminal 626, and the LD terminal 628 does not reach the resin portion of the upper wall portion 615b, that is, a width in the vertical direction is reduced. A protrusion 618 is formed in a center of a front side of the upper wall portion 615b. The protrusion 618 is a first blocking portion for preventing erroneous attachment, which is configured to prevent the low-voltage battery pack 101 that does not correspond to the high-voltage device main body 601 from being attached to the terminal part 615. In the vicinity of the terminal part 615, a second blocking portion (not visible in (A) and (B) of Fig. 28) is also formed to prevent the low/intermediate-voltage battery pack 201 (see Fig. 4) from being erroneously attached to the high-voltage device main body 601.

(B) of Fig. 28 is a view showing the shapes of the connection terminals (622, 627) for a power and the first to third short-circuiting bar 631 to 633 which are cast with the illustration of the resin portion of the terminal part of the terminal part 615 omitted. Each of the first to third short-circuiting bars 631 to 633 corresponds to the high voltage series terminal of the present invention. In the positive electrode input terminal 622, a portion between the terminal portion 622a and the upper connection portion 622c is the cast portion 627b which is cast in the upper wall portion 615b. Similarly, in the negative electrode input terminal 627, a portion between the terminal portion 627a and the upper connection portion 627c is the cast portion 622b which is cast in the upper wall portion 615b. The horizontal portion 633a of the third short-circuiting bar 633 is entirely cast in the upper wall portion 615b, and in each of the terminal portions 633b and 633c of the third short-circuiting bar 633 extending in the vertical direction, a portion on the upper side thereof is cast in the upper wall portion 615b. The horizontal portions 631a and 632a of the first and second short-circuiting bars 621 and 632 are cast in the base portion 615a. As described above, the positive electrode input terminal 622, the negative electrode input terminal 627, and the first to third short-circuiting bars 631 to 633 are all cast in the terminal part 615 to be firmly fixed thereto.

Fig. 29 is a schematic view showing shapes of terminal parts 15, 45, and 615 and is a view for explaining their size relationships. The external dimensions of a terminal arrangement region of the terminal part 15 are a length L and a height H, and the terminal part 15 is compatible with the terminal parts 15 and 45 (however, the presence or absence of the protrusion for preventing erroneous attachment or the like is different, but here it will not be mentioned). The shapes of the terminal parts 15 and 45 are the same as those of the first and second embodiments described with reference to (A) and (B) of Fig. 14 and Fig. 20. In the terminal part 615 for 72 V of the third embodiment, the positive electrode input terminal 622 and three short-circuiting bars 631 to 633 are disposed. In the terminal arrangement region, the positive electrode input terminal 622 is fitted to the positive electrode terminal 748 in a range of an upper half and a front half. The terminal portion 633b of the third short-circuiting bar 633 comes into contact with the positive electrode terminal 747 in a range of a lower half and a front half. The terminal portion 632b of the second short-circuiting bar 632 comes into contact with the positive electrode terminal 746 in a range of an upper half and a rear half. The terminal portion 631b of the first short-circuiting bar 631 comes into contact with the positive electrode terminal 745 in a range of a lower half and a rear half. In this way, in the terminal part 615, the terminal arrangement region having the height H and the length L is divided into four ranges of upper, lower, front, and rear ranges, and the positive electrode input terminal 622 and first to third short-circuiting bars 631 to 633 are disposed in the four ranges to be fitted to the connection terminals on a side of the three-voltage battery pack 701. In the third embodiment, by dividing the electrode portion of the terminal part 45 for 36 V (the intermediate-voltage device main body 31) serving as the base into four and using the divided electrode portion, it is possible to efficiently dispose the positive electrode input terminal 622, the negative electrode input terminal 627, the first to third short-circuiting bars 631 to 633, and the signal terminal groups 624 to 626 and 628.

As described above, in the third embodiment, an electric device system capable switching its output voltage to an appropriate output voltage simply by attaching the battery pack 701 to any one of the low-voltage device main body 1, the intermediate-voltage device main body 31, and the high-voltage device main body 601 can be realized. In particular, the three-voltage battery pack 701 capable of handling three voltages can be realized without increasing an area of the portion to which the connection terminals are attached and without increasing an area of the circuit board 730. That is, it is possible to make an installation space on the circuit board 730 for the positive electrode terminals 741 to 748 and the negative electrode terminals 761 to 764 of the three-voltage battery pack 701 be substantially the same size as an installation space for the positive electrode terminals and the negative electrode terminals of the battery pack of the related art (the fixed-voltage type 101, the two-voltage battery packs 201, 301), and thus it is possible to dispose the signal terminals in a space in the left-right direction between the positive electrode terminals and the negative electrode terminals on the circuit board 730, as in the battery pack of the related art. Therefore, even if the number of positive electrode terminals and negative electrode terminals increases, it is possible to curb an increase in the installation space for these terminals, and thus it is possible to curb an increase in the size of the circuit board 730.

In the third embodiment, the terminal portions (the positive electrode terminals, the negative electrode terminals, and the short-circuiting bars) of the three-voltage battery pack 701 are configured to extend in the vertical direction (upward from the circuit board 730). Therefore, it is possible to curb an increase in the dimension of the terminal portion in the front-rear direction, and it is possible to dispose many terminals in the terminal arrangement region extending in the front-rear direction as in the battery pack of the related art. As a result, it is possible to curb an increase in size of the circuit board 730. In addition, the terminal portions of the three-voltage battery pack 701 are configured to extend in the vertical direction, and the positive electrode terminals 745 to 748 and the negative electrode terminals 761 to 764 of two types (the large-sized terminal component 721 and the small-sized terminal component 726) different in the dimension in the vertical direction are used. As a result, in a case where the low-voltage device main body 1 is connected to the three-voltage battery pack 701, the positive electrode input terminal 22 and the negative electrode input terminal 27 of the low-voltage device main body 1 have large widths in the vertical direction, and thus the positive electrode input terminal 22 and the negative electrode input terminal 27 are reliably fitted to all of the positive electrode terminals 745 to 748 and the negative electrode terminals 761 to 764.

The vertical width of each of the positive electrode input terminal 52 and the negative electrode input terminal 57 is set such that in a case where the intermediate voltage electric device 31 is connected to the three-voltage battery pack 701, the positive electrode input terminal 52 and the negative electrode input terminal 57 are fitted to the positive electrode terminals and the negative electrode terminals configured with the large-sized terminal component 721 and are not fitted to (do not reach) the positive electrode terminals and the negative electrode terminals configured with the small-sized terminal component 726. On the other hand, the terminal portions 59b and 59c of the short-circuiting bar 59 are configured to extend in the front-rear direction and are provided at positions corresponding to the fitting portions of the positive electrode terminals and the negative electrode terminals configured with the small-sized terminal component 726. Therefore, the terminal portions 59b and 59c of the short-circuiting bar 59 are fitted to the positive electrode terminals and the negative electrode terminals configured with the small-sized terminal component 726, but are not fitted to the large-sized terminal component 721. This is because the large-sized terminal component 721 is formed such that the width dimension between the pair of arm portions on the lower side is larger than the thickness of the short-circuiting bar 59 not to come in contact with the short-circuiting bar 59 as in the second embodiment (for example, (A) and (B) of Fig. 15). As a result, the terminals 52 and 57 and the short-circuiting bar 59 of the intermediate voltage electric device 31 are reliably fitted only to the corresponding terminals.

The positive electrode input terminal 622, the negative electrode input terminal 627, and the first to third short-circuiting bars 631 to 633 are disposed such that in a case where the high-voltage device main body 601 is connected to the three-voltage battery pack 701, the positive electrode input terminal 622, the negative electrode input terminal 627, and the first to third short-circuiting bars 631 to 633 are reliably fitted to the fitting portions of the corresponding positive electrode terminals and negative electrode terminals of the three-voltage battery pack 701, and thus the positive electrode input terminal 622, the negative electrode input terminal 627, and the first to third short-circuiting bars 631 to 633 are not fitted to another terminal. This can be realized by configuring the terminals of the three-voltage battery pack 701 with the large-sized terminal component 721 and the small-sized terminal component 726. In addition, the number of terminal portions (positive electrode input terminals, positive electrode input terminals, and short-circuiting bars) of the high-voltage device main body 601 increases as compared with the existing electric device main body (for example, the intermediate-voltage device main body 31), but as a result of study on the shape of the terminal portion, the terminal portion 615 follows the shape of the terminal portion used in the existing electric device main body (for example, the terminal part 45 of the intermediate-voltage device main body 31), and thus it is possible to curb an increase in volume, weight, and cost of the terminal part 615.

As described above, according to the present invention, the terminal portions of the three-voltage battery pack 701 are configured to have a terminal structure corresponding to the positive electrode and negative electrode input terminals of the low-voltage device main body 1, the positive electrode input terminals, the negative electrode input terminals, and the short-circuiting bar of the intermediate-voltage device main body 31, and the positive electrode input terminals, the negative electrode input terminals, and the three short-circuiting bars of the high-voltage device main body 601, and thus it is possible to provide an electric device system that deals with a wide range of voltages. In addition, it is possible to maintain the compatibility with the existing fixed-voltage battery pack and the two-voltage battery pack, and it is possible to provide an electric device system with the improved compatibility and versatility. In addition, it is possible to provide an electric device system using the three-voltage battery pack.

Fig. 30 is a perspective view showing an arrangement of the battery cells in the three-voltage battery pack 701 in Fig. 21. Here, in the first cell unit 771, five battery cells 771a to 771e are disposed as shown, and the positive electrode and the negative electrode of the adjacent battery cells are electrically connected in series by a connecting tab made of a metal. In practice, the battery cell is fixed by a holding member made of a synthetic resin, which is called a separator, but illustration of the separator is omitted here. In the figure, + (plus) indicates a positive electrode side of the battery cell, and - (minus) indicates a negative electrode side. In the first cell unit 771, the positive electrode output is taken out from the battery cell 771a as indicated by an arrow and wired to the positive electrode terminal 745 (a detailed description of a wiring route is omitted). The second to fourth cell units 772 to 774 are similarly wired, and the positive electrode output of each is wired from the battery cell 772a to the positive electrode terminal 746 as indicated by an arrow, is wired from the battery cell 773a to the positive electrode terminal 747 as indicated by an arrow, and is wired from the battery cell 774a to the positive electrode terminal 748 as indicated by an arrow.

Each of the negative electrode sides of the first to fourth cell units 771 to 774 is wired from the left side surface of the three-voltage battery pack 701, is wired from the left side of the battery cell 771e to the negative electrode terminal 761 as indicated by an arrow, is wired from the left side of the battery cell 772e to the negative electrode terminal 762, is wired from the left side of the battery cell 773e to the negative electrode terminal 763, and is wired from the left side of the battery cell 774e to the negative electrode terminal 764.

Although the present invention has been described above on the basis of the embodiments, the present invention is not limited to the above-described embodiments, and various modifications can be made without departing from the scope of the invention. For example, in the above-described embodiments, the combinations of the low voltage, the intermediate voltage, and the high voltage are realized at rated 18 V, 36 V, and 72 V, but the present invention is not limited to only these combinations, and if a relationship of n V, 2n V, and 4n V (where n > 0) is satisfied, the present invention can be easily applied to battery pack groups of other voltages. Moreover, the type, shape, and voltage of the battery cell accommodated in each battery pack are arbitrary, and the electric device system may be realized using battery cells other than cylindrical lithium-ion batteries.

### [Reference Signs List]

1 Low-voltage device main body
1A Impact tool
2 Housing
2a Body part
2b Handle part
4 Operation switch
8 Tip tool holder
9 Tip tool
10 Battery pack attachment part
11a, 11b Rail portion
12 Curved portion
14 Protruding portion
15, 15A Terminal part
15a Vertical surface
15b Horizontal surface
16 Base portion
21, 22 Positive electrode input terminal
24 T terminal
25 V terminal
26 LS terminal
27 Negative electrode input terminal
28 LD terminal
31 Intermediate-voltage device main body
45 Terminal part
46 Base portion
47 Partition plate
48 Protrusion (for preventing erroneous attachment)
51, 52 Positive electrode input terminal
54 T terminal
55 V terminal
56 LS terminal
57 Negative electrode input terminal
58 LD terminal
59 Short-circuiting bar
59a Connection portion
59b, 59c Short-circuiting terminal portion
61 High-voltage device main body
75 Terminal part
76 Base portion
82 Positive electrode input terminal
84 T terminal
84c, 85c, 86c, 88c Connection portion
85 V terminal
86 LS terminal
87 Negative electrode input terminal
88 LD terminal
89 Short-circuiting bar
89a Connection portion
89b, 89c Short-circuiting terminal portion
101 Low-voltage battery pack
102 Lower case
105 slit
110 Upper case
111 Lower step surface
114 Stepped portion
115 Upper step surface
120 Slot group arrangement region
121 to 128 Slot
131 Stopper portion
132 Raised portion
133 Rear inclined surface
134 Slit
138a, 138b Rail portion
141a, 141b Latch button
142a, 142b Latching portion
145 First cell unit
146 Second cell unit
201 Low/intermediate-voltage battery pack
201 Battery pack
202 Lower case
210 Upper case
211 Lower step surface
215 Upper step surface
216 Recess
217a, 217b Protrusion
238a Rail portion
241a Latch
245 First cell unit
245a, 245e Battery cell
246 Second cell unit
246a, 246e Battery cell
250 Circuit board
260 Connection terminal group
261, 262 Upper positive electrode terminal
262a, 262b Arm portion
262c Leg portion
264 T terminal
265 V terminal
266 LS terminal
267 Upper negative electrode terminal
267a, 267b Arm portion
268 LD terminal
271, 272 Lower positive electrode terminal
272a, 272b Arm portion
277 Lower negative electrode terminal
277a, 277b Arm portion
280 Display part
281 to 284 Display window
285 Switch button
301 Intermediate/high-voltage battery pack
302 Lower case
302a Extending portion
310 Upper case
310a Extending portion
345 First cell unit
346 Second cell unit
350 Circuit board
360 Connection terminal group
361, 362 Upper positive electrode terminal
362a, 362b Arm portion
364 T terminal
365 V terminal
366 LS terminal
367 Upper negative electrode terminal
367a Arm portion
368 LD terminal
371, 372 Lower positive electrode terminal
372a, 372b Arm portion
377 Lower negative electrode terminal
377a, 377b Arm portion
461 High-voltage device main body
475 Terminal part
476 Base portion
476a Horizontal portion
478 Protrusion
482 Positive electrode input terminal
487 Negative electrode input terminal
489 Short-circuiting bar
489a Connection portion
489b, 489c Terminal portion (of short-circuiting bar)
501 Intermediate/high-voltage battery pack
545 First cell unit
546 Second cell unit
550 Circuit board
560 Connection terminal group
561, 562 Rear positive electrode terminal
561a, 561b Arm portion
562a, 562b Arm portion
562a, 562d Leg portion
567 Front negative electrode terminal
567a, 567b Arm portion
571, 572 Front positive electrode terminal
577 Rear negative electrode terminal
577a, 577b Arm portion
601 High-voltage device main body
615 Terminal part
615a Base portion
615b Upper wall portion
618 Protrusion
622 Positive electrode input terminal
622a Terminal portion
622b Cast portion
622c Connection portion
624 T terminal
625 V terminal
626 LS terminal
627 Negative electrode input terminal
627a Terminal portion
627c Connection portion
628 LD terminal
631 Short-circuiting bar
631a Horizontal portion
631b, 631c Terminal portion
632 Short-circuiting bar
632a Horizontal portion
632b Terminal portion
632c Terminal portion
633 Short-circuiting bar
633a Horizontal portion
633b Terminal portion
633c Terminal portion
635 Attachment direction
701 Three-voltage battery pack
721 Large-sized terminal component
721a, 721b Arm portion
721c Base portion
721d, 721e Leg portion
726 Small-sized terminal component
726a, 726b Arm portion
726c Base portion
726d, 726e Leg portion
730 Circuit board
740 Connection terminal group
741 to 748 Positive electrode terminal
745a, 745b, 746a, 746b Arm portion
747a, 747b, 748a, 748b Arm portion
754 T terminal
755 V terminal
756 LS terminal
758 LD terminal
761 to 764 Negative electrode terminal
761a, 761b, 762a, 762b Arm portion
763a, 763b, 764a, 764b Arm portion
771 to 774 Cell unit
771a to 771e, 772a to 772e Battery cell
773a to 773e, 774a to 774e Battery cell

## Claims

1. An electric device system comprising:
a low/intermediate-voltage battery pack capable of outputting a low voltage or an intermediate voltage;
an intermediate/high-voltage battery pack capable of outputting the intermediate voltage or a high voltage;
a low-voltage device main body configured to be connected to the low/intermediate-voltage battery pack and supplied with the low voltage;
an intermediate-voltage device main body configured to be connected to the low/intermediate-voltage battery pack and the intermediate/high-voltage battery pack and supplied with the intermediate voltage; and
a high-voltage device main body configured to be connected to the intermediate/high-voltage battery pack and supplied with the high voltage.

2. The electric device system according to claim 1,
wherein the low/intermediate-voltage battery pack and the intermediate/high-voltage battery pack each have a plurality of cell units,
wherein the intermediate-voltage device main body has an intermediate voltage series terminal that connects the plurality of cell units of the low/intermediate-voltage battery pack in series when connected to the battery pack and an intermediate voltage parallel terminal that connects the plurality of cell units of the intermediate/high-voltage battery pack in parallel when connected to the battery pack, and
wherein the high-voltage device main body has a high voltage series terminal that connects the plurality of cell units of the intermediate/high-voltage battery pack in series when connected to the battery pack.

3. The electric device system according to claim 2,
wherein, when the intermediate-voltage device main body is connected to the intermediate/high-voltage battery pack, the intermediate voltage series terminal is not connected to any terminal.

4. The electric device system according to claim 2 or 3,
wherein the intermediate/high-voltage battery pack has a pair of first output terminals connected to a positive electrode and a negative electrode of one of the plurality of cell units and a pair of second output terminals connected to a positive electrode and a negative electrode of another of the plurality of cell units,
wherein the high-voltage device main body has a first input terminal connected to one of a positive electrode and a negative electrode of the pair of first output terminals and a second input terminal connected to the other of a positive and a negative electrode of the pair of second output terminals, and
wherein the high voltage series terminal is connected to the other of the positive electrode and the negative electrode of the pair of first output terminals and to one of the positive electrode and the negative electrode of the pair of second output terminals.

5. The electric device system according to claim 3,
wherein the intermediate/high-voltage battery pack has a board disposed above the plurality of cell units, a pair of first output terminals extending upward from the board and connected to a positive electrode and a negative electrode of one of the plurality of cell units, and a pair of second output terminals extending upward from the board and connected to a positive electrode and a negative electrode of another of the plurality of cell units, and
wherein the pair of first output terminals and the pair of second output terminals each have a connection portion connected to an input terminal of the intermediate-voltage device main body and an avoidance portion that is positioned between the connection portion and the board and avoids the intermediate voltage series terminal.

6. The electric device system according to any one of claims 1 to 5,
wherein the intermediate/high-voltage battery pack is further configured to output the low voltage.

7. An electric device system comprising:
a battery pack that has a plurality of cell units and output terminals connected to the plurality of cell units, the battery pack being one of a three-voltage battery pack capable of outputting low/intermediate voltages and a low/intermediate-voltage battery pack capable of outputting low/intermediate voltages;
a high-voltage device main body configured to be connectable with the three-voltage battery pack and supplied with the high voltage from the connected three-voltage battery pack;
an intermediate-voltage device main body configured to be connectable with the three-voltage battery pack or the low/intermediate-voltage battery pack battery pack and supplied with the intermediate voltage from the connected three-voltage battery pack or low/intermediate-voltage battery pack; and
a low-voltage device main body configured to be connectable with the three-voltage battery pack or the low/intermediate-voltage battery pack and supplied with the low voltage from the connected three-voltage battery pack or low/intermediate-voltage battery pack.

8. The electric device system according to claim 7,
wherein the intermediate-voltage device main body has an intermediate voltage series terminal configured to connect the plurality of cell units in series by being connected to some of the output terminals when connected to the three-voltage battery pack and to connect all of the plurality of the cell units in series by being connected to some of the output terminals when connected to the low/intermediate-voltage battery pack.

9. The electric device system according to claim 8,
wherein the intermediate-voltage device main body has an intermediate voltage parallel terminal configured to connect the plurality of cell units in parallel by being connected to output terminals other than the some of the output terminals when connected to the three-voltage battery pack and to connect the plurality of cell units to output terminals other than the some of the output terminals when connected to the low/intermediate-voltage battery pack.

10. The electric device system according to claim 9, further comprising:
an intermediate/high-voltage battery pack that has a plurality of cell units and output terminals connected to the plurality of cell units and is capable of outputting the intermediate voltage and the high voltage,
wherein the intermediate voltage series terminal is configured not to be connected to the output terminals when the intermediate-voltage device main body is connected to the intermediate/high-voltage battery pack, and the intermediate voltage parallel terminal is configured to connect the plurality of cell units in parallel by being connected to the output terminals when the intermediate-voltage device main body is connected to the intermediate/high-voltage battery pack.

11. An electric device system comprising:
a three-voltage battery pack capable of outputting a low voltage, an intermediate voltage, and a high voltage;
a two-voltage battery pack capable of outputting any two of the low voltage, the intermediate voltage, and the high voltage, or a one-voltage battery pack capable of outputting any one of the low voltage, the intermediate voltage, and the high voltage;
a high-voltage device main body configured to be connected to the three-voltage battery pack and the two-voltage battery pack capable of outputting the high voltage or the one-voltage battery pack capable of outputting the high voltage and supplied with the high voltage;
an intermediate-voltage device main body configured to be connected to the three-voltage battery pack and the two-voltage battery pack capable of outputting the intermediate voltage or the one-voltage battery pack capable of outputting the intermediate voltage and supplied with the intermediate voltage; and
a low-voltage device main body configured to be connected to the three-voltage battery pack and the two-voltage battery pack capable of outputting the low voltage or the one-voltage battery pack capable of outputting the low voltage and supplied with the low voltage.

12. The electric device system according to claim 11,
wherein the three-voltage battery pack and the two-voltage battery pack each have a plurality of cell units,
wherein the intermediate-voltage device main body has
an intermediate voltage series terminal that connects some of the plurality of cell units of the three-voltage battery pack or the two-voltage battery pack in series when connected to the battery pack capable of outputting the intermediate voltage and the high voltage and connects the plurality of cell units of the two-voltage battery pack in series when connected to the battery pack capable of outputting the low voltage and the intermediate voltage, and
an intermediate voltage parallel terminal that connects some of the plurality of cell units of the three-voltage battery pack or the two-voltage battery pack in parallel when connected to the battery pack capable of outputting the intermediate voltage and the high voltage and connects the plurality of cell units of the two-voltage battery pack in parallel when connected to the battery pack capable of outputting the low voltage and the intermediate voltage, and
wherein the high-voltage device main body has a high voltage series terminal that connects the plurality of cell units of the three-voltage battery pack or the two-voltage battery pack in series when connected to the battery pack capable of outputting the intermediate voltage and the high voltage.

13. A battery pack which is an intermediate/high-voltage battery pack that has a plurality of first cell units, is capable of switching an output voltage between an intermediate voltage and a high voltage according to a connection state of the plurality of cell units, and is capable of being connected to a high-voltage device main body and an intermediate-voltage device main body, the battery pack comprising:
a first slot into which power supply terminals of the high-voltage device main body and the intermediate-voltage device main body are able to be inserted; and
a second slot into which none of the terminals of the high-voltage device main body is inserted when connected to the high-voltage device main body,
wherein, when the battery pack is connected to the intermediate-voltage device main body, a short-circuiting bar provided in the intermediate-voltage device main body, which connects a plurality of second cell units of a low/intermediate-voltage battery pack capable of switching an output voltage between a low voltage and the intermediate voltage in series when the intermediate-voltage device main body is connected to the low/intermediate-voltage battery pack, is inserted into the second slot.
